# EUROPEAN PATENT APPLICATION

(11) **EP 3 514 480 A1**
(43) Date of publication of application: **24.07.2019**
(21) Application number: 17863174.3
(22) Date of filing: 19.10.2017
(51) Int. Cl.: G01B 7/30, B62D 5/04, H02K 11/215

(54) **SENSOR MOUNTING STRUCTURE, ELECTRIC MOTOR, AND ELECTRIC POWER STEERING DEVICE**

(30) Priority: 19.10.2016 JP 2016205376; 19.10.2016 JP 2016205377; 19.10.2016 JP 2016205378; 17.10.2017 JP 2017201319; 17.10.2017 JP 2017201320
(71) Applicant: NSK Ltd., Tokyo 141-8560 (JP)
(72) Inventor: KANEKO, Noboru, Tokyo 141-8560 (JP); MORIMOTO, Masakazu, Tokyo 141-8560 (JP); HAGIWARA, Makoto, Tokyo 141-8560 (JP); SUZUKI, Ryoichi, Fujisawa-shi Kanagawa 251-8501 (JP)
(74) Representative: SSM Sandmair
(86) International application number: PCT/JP2017/037840
(87) International publication number: WO 2018/074549

(57) **Abstract**

An assembly structure of a sensor includes: a shaft; a housing including: a first cylindrical part; and a first annular plate that is an annular plate, an outer periphery of which is connected to an end of the first cylindrical part, and that is orthogonal to a rotation axis of the shaft; a magnet accommodated inside the first cylindrical part in a radial direction and fixed to an end of the shaft; a sensor configured to detect rotation of the magnet; and a holder that is fixed to the first annular plate and that holds the sensor such that the sensor is disposed at a predetermined position with respect to the magnet.

## Description

### Field

The present invention relates to an assembly structure of a sensor, an electric motor, and an electric power steering device.

### Background

Electric steering devices of cars and the like each include a motor that assists steering torque input from a steering wheel. Electric steering devices control the motor based on torque detected by a torque sensor, vehicle speed detected by a vehicle speed sensor, and a rotation angle of the motor detected by a rotation angle sensor.

To detect the rotation angle of the motor, a resolver, a rotary encoder, an MR sensor, and the like are used. Patent Literature 1 describes a motor having a resolver recess, into which a resolver is inserted on the outer surface of a motor case. The motor described in Patent Literature 1 has a structure in which the resolver is fixed to the resolver recess. This structure can improve the accuracy in positioning the resolver, simplify positioning the resolver, and increase the productivity of the motor. Patent Literature 2 describes a rotation detection device using an MR sensor.

### Citation List

### Patent Literature

Patent Literature 1: Japanese Patent Application Laid-open No. 2012-147550
Patent Literature 2: Japanese Patent Application Laid-open No. 2017-143603

### Summary

### Technical Problem

Recent years have seen requirement of an electric steering device to continue to detect the rotation angle of the motor even if one rotation angle sensor fails. Specifically, an electric steering device is provided with a plurality of rotation angle sensors for what is called redundancy. MR sensors are widely used as the rotation angle sensors because they can achieve redundancy more easily than resolvers and rotary encoders. If MR sensors are used, however, the detection accuracy may possibly be significantly deteriorated because of their misalignment with a shaft of the motor. In view of the background described above, MR sensors are required to be assembled to the motor more accurately.

In view of the circumstances described above, the present invention aims to provide an assembly structure of a sensor having high assembly accuracy, an electric motor, and an electric power steering device.

### Solution to Problem

According to a first aspect of the present invention in order to solve the above-described problem and achieve the aim, an assembly structure of a sensor includes: a shaft; a housing including: a first cylindrical part; and a first annular plate that is an annular plate, an outer periphery of which is connected to an end of the first cylindrical part, and that is orthogonal to a rotation axis of the shaft; a magnet accommodated inside the first cylindrical part in a radial direction and fixed to an end of the shaft; a sensor configured to detect rotation of the magnet; and a holder that is fixed to the first annular plate and that holds the sensor such that the sensor is disposed at a predetermined position with respect to the magnet.

### Advantageous Effects of Invention

The present invention can provide an assembly structure of a sensor having high assembly accuracy, an electric motor, and an electric power steering device.

### Brief Description of Drawings

FIG. 1 is a configuration diagram of an example of an electric power steering device including an electric motor according to a first embodiment.
FIG. 2 is a perspective view of the electric motor according to the first embodiment.
FIG. 3 is a sectional view schematically illustrating a section of the electric motor according to the first embodiment.
FIG. 4 is a sectional view schematically illustrating, in an enlarged manner, a section of an assembly structure of a sensor according to the first embodiment.
FIG. 5 is a sectional view schematically illustrating, in an enlarged manner, a section of a bearing fixing part according to the first embodiment.
FIG. 6 is a diagram for explaining the positional relation between a permanent magnet, a first sensor, and a second sensor according to the first embodiment.
FIG. 7 is a circuit diagram of a circuit configuration of a sensor chip according to the first embodiment.
FIG. 8 is a perspective view of a sensor substrate according to the first embodiment.
FIG. 9 is a perspective view of a holder according to the first embodiment.
FIG. 10 is an exploded perspective view of the electric motor and the holder according to the first embodiment.
FIG. 11 is an exploded perspective view of the holder and a holder cover according to the first embodiment.
FIG. 12 is a flowchart of a procedure for assembling the assembly structure of the sensor and the electric motor including the assembly structure of the sensor according to the first embodiment.
FIG. 13 is a sectional view schematically illustrating, in an enlarged manner, a section of the assembly structure of the sensor according to a first modification of the first embodiment.
FIG. 14 is a plan view schematically illustrating a sealing member according to the first modification of the first embodiment.
FIG. 15 is a sectional view schematically illustrating, in an enlarged manner, a section of the assembly structure of the sensor according to a second modification of the first embodiment.
FIG. 16 is a sectional schematic view illustrating the position Q in FIG. 15 in an enlarged manner.
FIG. 17 is a diagram for explaining the permanent magnet according to a third modification of the first embodiment.
FIG. 18 is a perspective view of the electric motor according to a second embodiment.
FIG. 19 is a front view of a housing viewed from the unload side according to the second embodiment.
FIG. 20 is a sectional view schematically illustrating, in an enlarged manner, a section of the assembly structure of the sensor according to the second embodiment.
FIG. 21 is a perspective view of the holder according to the second embodiment.
FIG. 22 is a flowchart of a procedure for assembling the assembly structure of the sensor and the electric motor including the assembly structure of the sensor according to the second embodiment.
FIG. 23 is a diagram for explaining a procedure for assembling the holder to the housing at a holder mounting step.
FIG. 24 is an exploded perspective view of the electric motor and an ECU according to the second embodiment.
FIG. 25 is a diagram for explaining a procedure for assembling the sensor substrate to the holder at a substrate mounting step.
FIG. 26 is a front view of the holder, to which the sensor substrate is fixed, viewed from the unload side.
FIG. 27 is an exploded perspective view of the holder and the holder cover according to the second embodiment.
FIG. 28 is a perspective view of the electric motor according to a third embodiment.
FIG. 29 is a sectional view schematically illustrating, in an enlarged manner, a section of the assembly structure of the sensor according to the third embodiment.
FIG. 30 is a diagram for explaining the positional relation between the holder and the sensor chip inside the holder viewed in a rotation axis direction according to the third embodiment.
FIG. 31 is a flowchart of a procedure for assembling the assembly structure of the sensor and the electric motor including the assembly structure of the sensor according to the third embodiment.
FIG. 32 is a diagram for explaining a sensor substrate mounting procedure according to the third embodiment.
FIG. 33 is a plan view of the holder, to which the sensor substrate is fixed, when viewed from the load side according to the third embodiment.
FIG. 34 is a perspective view of an ECU assembly obtained by assembling the ECU and the holder according to the third embodiment.
FIG. 35 is an exploded perspective view of the electric motor and the ECU according to the third embodiment.
FIG. 36 is a diagram for explaining a holder mounting procedure according to the third embodiment.
FIG. 37 is a perspective view of a second magnetic shielding member according to a fourth embodiment.
FIG. 38 is a sectional view schematically illustrating, in an enlarged manner, a section of the assembly structure of the sensor according to the fourth embodiment.
FIG. 39 is a front view of the holder, to which the sensor substrate is fixed, when viewed from the unload side according to the fourth embodiment.
FIG. 40 is a sectional view schematically illustrating, in an enlarged manner, a section of the assembly structure of the sensor according to a fifth embodiment.
FIG. 41 is a perspective view of the holder, when viewed from the unload side according to a sixth embodiment.
FIG. 42 is a perspective view of the holder, when viewed from the load side according to the sixth embodiment.
FIG. 43 is a sectional view schematically illustrating, in an enlarged manner, a section of the assembly structure of the sensor according to the sixth embodiment.
FIG. 44 is a sectional view schematically illustrating, in an enlarged manner, a section of the assembly structure of the sensor according to a seventh embodiment. Description of Embodiments

Exemplary aspects (embodiments) to embody the present invention are described below in greater detail with reference to the accompanying drawings. The contents described in the embodiments are not intended to limit the present invention. Components described below include components easily conceivable by those skilled in the art and components substantially identical therewith. Furthermore, the components described below may be appropriately combined.

### First embodiment

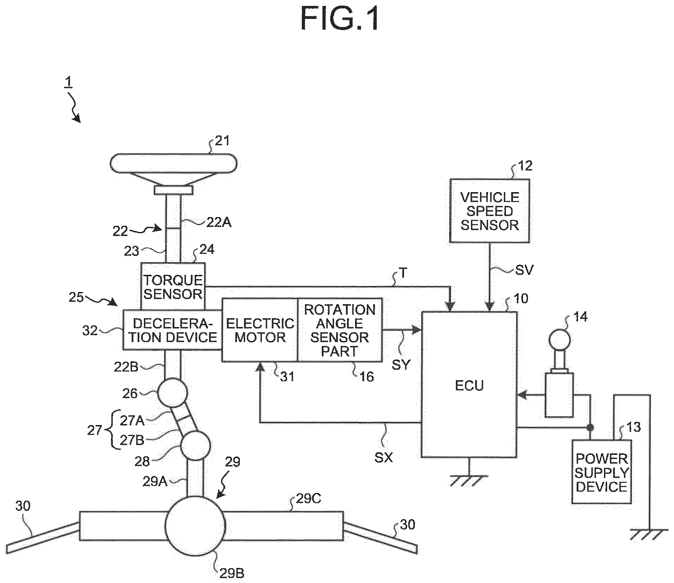

FIG. 1 is a configuration diagram of an example of an electric power steering device including an electric motor according to a first embodiment. The following describes an outline of the electric power steering device with reference to FIG. 1.

### Electric power steering device

An electric power steering device 1 includes a steering wheel 21, a steering shaft 22, a torque sensor 24, an electric assist device 25, a universal joint 26, an intermediate shaft 27, a universal joint 28, a steering gear mechanism 29, and tie rods 30 in order of transmission of force supplied from a driver (operator). The electric power steering device 1 has a column-assist mechanism in which at least part of the electric assist device 25 is supported by a steering column, which is not illustrated, to apply assist force to the steering shaft 22.

As illustrated in FIG. 1, the steering shaft 22 includes an input shaft 22A, an output shaft 22B, and a torque sensor shaft 23 disposed between the input shaft 22A and the output shaft 22B. One end of the input shaft 22A is connected to the steering wheel 21, and the other end thereof is connected to the torque sensor shaft 23. The torque sensor shaft 23 is connected to one end of the output shaft 22B with the torque sensor 24 interposed therebetween. The steering shaft 22 is rotated by steering force applied to the steering wheel 21.

The torque sensor 24 detects steering torque T of the steering shaft 22. The torque sensor 24 is connected to an ECU 10 and outputs information on the detected steering torque T to the ECU 10.

The electric assist device 25 includes an electric motor 31 and a deceleration device 32. The electric motor 31 is an electric motor that generates assist steering torque for assisting the steering performed by the driver. The electric motor 31 may be a brushless motor or a motor including a brush and a commutator. The electric motor 31 is connected to the deceleration device 32 and outputs the assist steering torque to the deceleration device 32. The deceleration device 32 is connected to the output shaft 22B. The deceleration device 32 is rotated by the assist steering torque input from the electric motor 31, and the torque is transmitted to the output shaft 22B.

The intermediate shaft 27 includes an upper shaft 27A and a lower shaft 27B and transmits the torque of the output shaft 22B. The upper shaft 27A is connected to the output shaft 22B with the universal joint 26 interposed therebetween. Meanwhile, the lower shaft 27B is connected to a pinion shaft 29A of the steering gear mechanism 29 with the universal joint 28 interposed therebetween. The upper shaft 27A and the lower shaft 27B are splined to each other.

The steering gear mechanism 29 has a rack and pinion mechanism and includes the pinion shaft (input shaft) 29A, a pinion 29B, and a rack 29C. One end of the pinion shaft 29A is connected to the intermediate shaft 27 with the universal joint 28 interposed therebetween, and the other end thereof is connected to the pinion 29B. The rack 29C engages with the pinion 29B. Rotational motion of the steering shaft 22 is transmitted to the steering gear mechanism 29 via the intermediate shaft 27. The rotational motion is converted into linear motion by the rack 29C. The tie rods 30 are connected to the rack 29C.

A vehicle (not illustrated) provided with the electric power steering device 1 includes the electronic control unit (ECU) 10, a vehicle speed sensor 12, a power supply device 13, and an ignition switch 14 illustrated in FIG. 1. The electric power steering device 1 is controlled by the ECU 10 included in the vehicle. That is, the ECU 10 is a control device that controls the electric motor 31. The power supply device 13 is, for example, a vehicle-installed battery device, and is connected to the ECU 10. When the ignition switch 14 is turned on, electric power is supplied from the power supply device 13 to the ECU 10.

The vehicle speed sensor 12 detects the traveling speed of the vehicle. The vehicle speed sensor 12 is connected to the ECU 10. A vehicle speed signal SV detected by the vehicle speed sensor 12 is output to the ECU 10.

The electric motor 31 includes a rotation angle sensor part 16. The rotation angle sensor part 16 detects the rotation phase of the electric motor 31. The rotation angle sensor part 16 is connected to the ECU 10. A rotation phase signal SY detected by the rotation angle sensor part 16 is output to the ECU 10. The configuration of the rotation angle sensor part 16 will be described later in detail.

The ECU 10 acquires: the steering torque T from the torque sensor 24; the vehicle speed signal SV of the vehicle from the vehicle speed sensor 12; and the rotation phase signal SY of the electric motor 31 from the rotation angle sensor part 16. The ECU 10 calculates an assist steering command value of an assist command based on the steering torque T, the vehicle speed signal SV, and the rotation phase signal SY. Based on the calculated assist steering command value, the ECU 10 outputs a control signal SX to the electric motor 31.

The steering force of the driver input to the steering wheel 21 is transmitted to the deceleration device 32 of the electric assist device 25 via the input shaft 22A. At this time, the ECU 10 acquires the steering torque T input to the input shaft 22A from the torque sensor 24. The ECU 10 acquires the vehicle speed signal SV from the vehicle speed sensor 12. The ECU 10 acquires the rotation phase signal SY of the electric motor 31 from the rotation angle sensor part 16. The ECU 10 outputs the control signal SX and controls the operation of the electric motor 31. The assist steering torque generated by the electric motor 31 is transmitted to the deceleration device 32. The deceleration device 32 supplies the assist steering torque to the output shaft 22B. The output shaft 22B outputs torque obtained by adding the assist steering torque transmitted from the electric motor 31 to the steering torque of the steering wheel 21. In this manner, steering of the steering wheel performed by the driver is assisted by the electric power steering device 1.

The electric power steering device 1 according to the present embodiment, for example, may have a rack-assist mechanism that applies assist force to the rack 29C or a pinion-assist mechanism that applies assist force to the pinion 29B.

### Electric motor

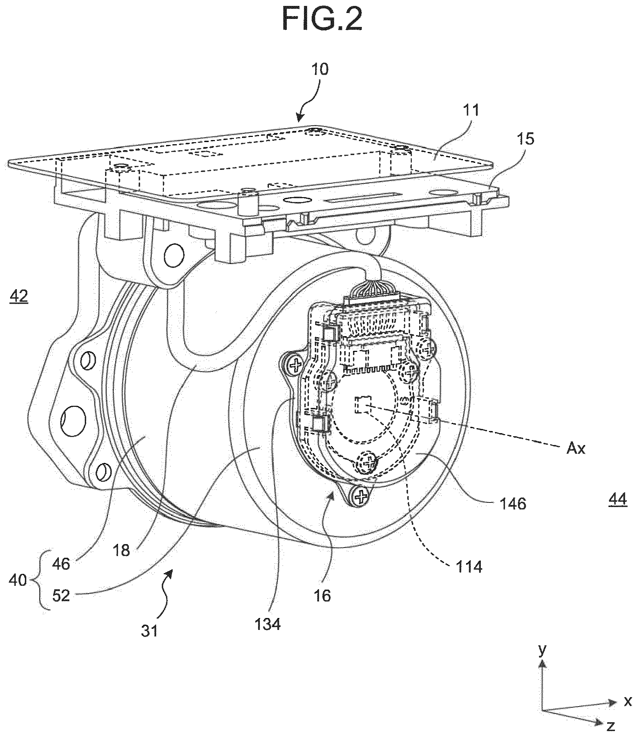

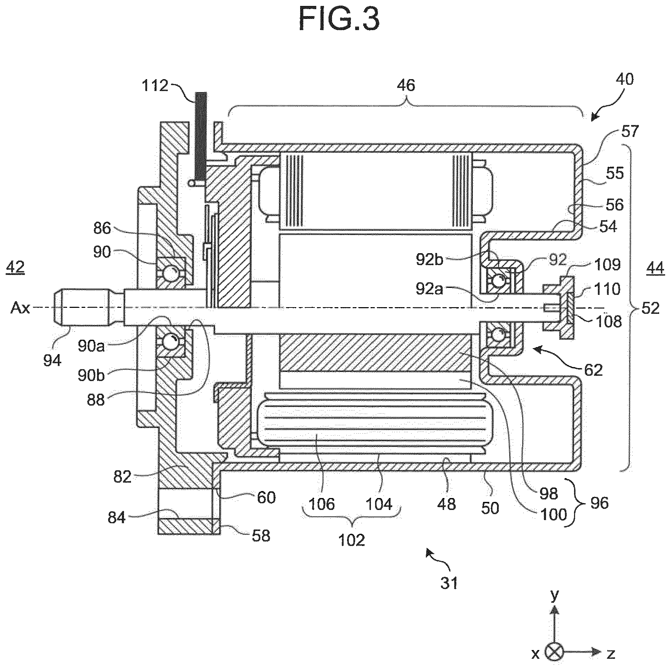

The following describes an assembly structure 200 of a sensor and the electric motor 31 provided with the assembly structure 200 of the sensor according to the first embodiment with reference to FIGS. 2 to 11. FIG. 2 is a perspective view of the electric motor according to the first embodiment. FIG. 3 is a sectional view schematically illustrating a section of the electric motor according to the first embodiment. In the following description, an xyz orthogonal coordinate system is used, and the present embodiment may be described with reference to the xyz orthogonal coordinate system. The z-axis direction is a direction parallel to a rotation axis Ax of the electric motor 31. The x-axis direction is one direction in a plane orthogonal to the z-axis direction, and the y-axis direction is a direction orthogonal to the x-axis direction in the plane orthogonal to the z-axis direction. A radial direction is a direction away from the rotation axis Ax in the x-y plane centering on the rotation axis Ax.

As illustrated in FIG. 3, in the electric motor 31, a shaft 94, which will be described later, is connected to the deceleration device 32 (refer to FIG. 1) on a load side 42. As illustrated in FIG. 2, the rotation angle sensor part 16 is disposed on an unload side 44, which is opposite to the load side 42, of the electric motor 31. As illustrated in FIG. 3, a housing 40 of the electric motor 31 includes a first cylindrical part 46 and a bottom wall 52. The rotation angle sensor part 16 is fixed to the bottom wall 52. The housing 40 will be described later in detail.

As illustrated in FIG. 2, the rotation angle sensor part 16 includes at least a holder 134 and a sensor chip 114. To prevent intrusion of foreign matter, the sensor chip 114 is covered and protected with a holder cover 146. The sensor chip 114 is disposed at a predetermined position with respect to the rotation axis Ax.

As illustrated in FIG. 2, the ECU 10 includes a heat sink 15 that not only serves as a housing of the ECU 10 but also has a function of promoting heat radiation from a circuit substrate 11 of the ECU 10. The heat sink 15 has a curved surface extending along the first cylindrical part 46. The heat sink 15 is fixed to the housing 40 with screws, for example.

A harness 18 is a cable that transmits the rotation phase signal SY (refer to FIG. 1) detected by the rotation angle sensor part 16 to the ECU 10. The harness 18 electrically connects the circuit substrate 11 of the ECU 10 and the rotation angle sensor part 16. The harness 18 is connected to the circuit substrate 11 of the ECU 10 together with a bus bar 112, which will be described later. Alternatively, the harness 18 may be connected to the circuit substrate 11 of the ECU 10 through a through hole (not illustrated) that is individually formed and that penetrates through the heat sink 15.

The harness 18 has a length longer than the minimum length required to connect the ECU 10 and the rotation angle sensor part 16. In other words, the harness 18 has an extra length. When the harness 18 electrically connects the ECU 10 and the rotation angle sensor part 16, for example, the harness 18 is curved as illustrated in FIG. 2. This can prevent excessive tension from being applied to connections at both ends of the harness 18 when the harness 18 electrically connects the ECU 10 and the rotation angle sensor part 16.

As illustrated in FIG. 3, the electric motor 31 includes the housing 40, a front bracket 82, a load-side bearing 90, an unload-side bearing 92, the shaft 94, a rotor 96, a stator 102, a permanent magnet 108, a fixing part 109, and the bus bar 112.

The housing 40 includes the first cylindrical part 46, the bottom wall 52, and a flange 58. The housing 40 is a case that accommodates the rotor 96 and the stator 102. The shaft 94 penetrates through the housing 40. While the material of the housing 40 is steel plate cold commercial (SPCC), it is not limited thereto. The material of the housing 40 may be steel or electromagnetic soft iron, for example.

The first cylindrical part 46, the bottom wall 52, and the flange 58 constituting the housing 40 are integrally formed by press working. The press working is cylinder drawing, for example. The cylinder drawing is a metal forming method of fixing a blank, which is a material to be processed, to a die and applying pressure to the blank by a pressing machine to form the blank into the shape of the die.

The first cylindrical part 46 has a cylindrical shape. The first cylindrical part 46 is a side wall of the housing 40. The first cylindrical part 46 has a first cylindrical part inner peripheral surface 48 and a first cylindrical part outer peripheral surface 50. The first cylindrical part inner peripheral surface 48 is the inside surface of the first cylindrical part 46 in the radial direction. The first cylindrical part outer peripheral surface 50 is the outside surface of the first cylindrical part 46 in the radial direction.

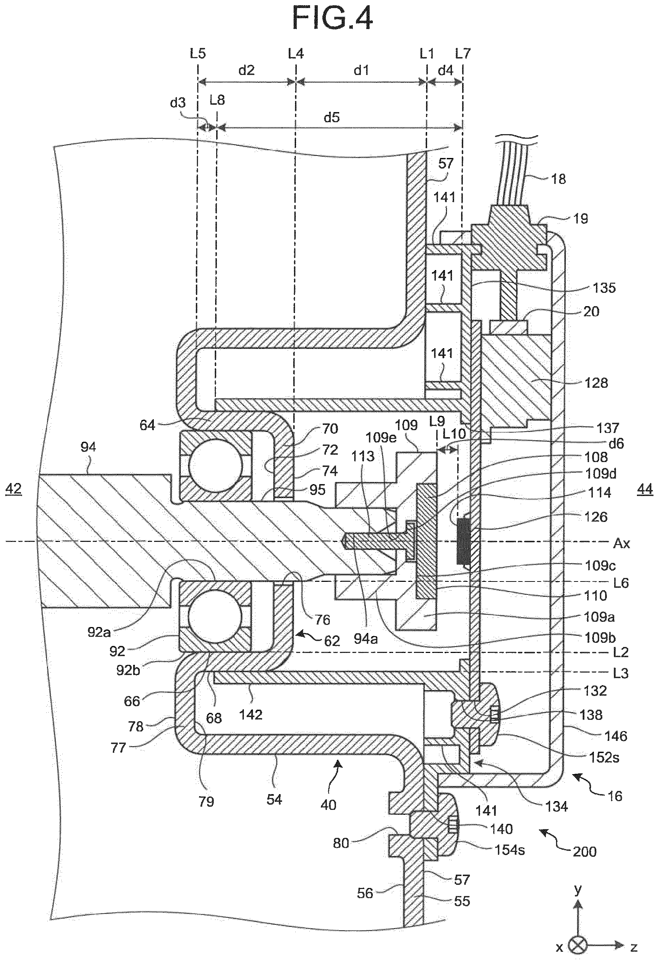

FIG. 4 is a sectional view schematically illustrating, in an enlarged manner, a section of the assembly structure of the sensor according to the first embodiment. As illustrated in FIG. 3, the bottom wall 52 is a member that covers the end of the first cylindrical part 46 on the unload side 44. The bottom wall 52 has a second cylindrical part 54, a bearing fixing part 62, a first annular plate 55, and a second annular plate 77 (refer to FIG. 4).

As illustrated in FIG. 3, the second cylindrical part 54 is a cylindrical member. The second cylindrical part 54 is positioned on the inner side in the radial direction than the first cylindrical part 46.

As illustrated in FIG. 3, the first annular plate 55 is an annular plate. The outer periphery of the first annular plate 55 is connected to the end of the first cylindrical part 46 on the unload side 44. The inner periphery of the first annular plate 55 is connected to the end surface of the second cylindrical part 54 on the unload side 44.

As illustrated in FIG. 4, the first annular plate 55 has a first annular plate inner surface 56, a first annular plate outer surface 57, and screw holes 80. As illustrated in FIGS. 3 and 4, the first annular plate inner surface 56 is the surface of the first annular plate 55 on the load side 42. The first annular plate outer surface 57 is the surface of the first annular plate 55 on the unload side 44. A position L1 illustrated in FIG. 4 indicates the position of the first annular plate outer surface 57 in the z-axis direction. The screw holes 80 are formed in the first annular plate 55.

As illustrated in FIG. 4, the bearing fixing part 62 has a bearing fixing part side wall 64, a bearing fixing part bottom wall 70, and a bearing fixing part bottom wall opening 76. The bearing fixing part side wall 64 has a bearing fixing part side wall inner surface 66 and a bearing fixing part side wall outer surface 68. The bearing fixing part side wall inner surface 66 is the inside surface of the bearing fixing part side wall 64 in the radial direction. The bearing fixing part side wall outer surface 68 is the outside surface of the bearing fixing part side wall 64 in the radial direction.

The bearing fixing part side wall 64 is a cylindrical member. The bearing fixing part side wall 64 is positioned on the inner side in the radial direction than the second cylindrical part 54. The cylinder length of the bearing fixing part side wall 64 is shorter than that of the second cylindrical part 54. With this structure, the bearing fixing part 62 is accommodated in the hollow part of the second cylindrical part 54. As a result, the length of the electric motor 31 in the z-axis direction can be reduced.

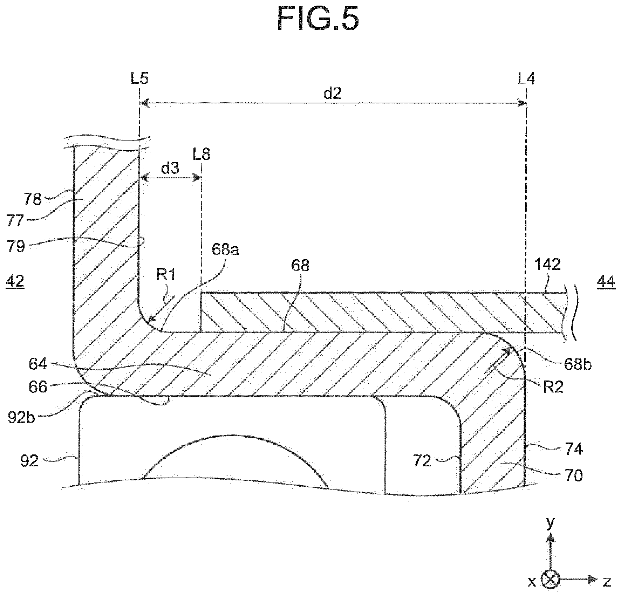

FIG. 5 is a sectional view schematically illustrating, in an enlarged manner, a section of the bearing fixing part according to the first embodiment. As illustrated in FIG. 5, the bearing fixing part side wall outer surface 68 has a curved surface 68a having a radius of curvature R1 at the end on the load side 42. The bearing fixing part side wall outer surface 68 has a curved surface 68b having a radius of curvature R2 at the end on the unload side 44. The curved surfaces 68a and 68b are formed by press working. A position L2 illustrated in FIG. 4 indicates the position of the bearing fixing part side wall inner surface 66 in the radial direction of the rotation axis Ax. A position L3 illustrated in FIG. 4 indicates the position of the bearing fixing part side wall outer surface 68 in the radial direction of the rotation axis Ax.

As illustrated in FIG. 4, the bearing fixing part bottom wall 70 is a member that covers the bearing fixing part side wall 64 on the unload side 44. The bearing fixing part bottom wall 70 has a bearing fixing part bottom wall inner surface 72 and a bearing fixing part bottom wall outer surface 74. The bearing fixing part bottom wall inner surface 72 is the surface of the bearing fixing part bottom wall 70 on the load side 42. The bearing fixing part bottom wall outer surface 74 is the surface of the bearing fixing part bottom wall 70 on the unload side 44. A position L4 illustrated in FIGS. 4 and 5 indicates the position of the bearing fixing part bottom wall outer surface 74 in the z-axis direction.

As illustrated in FIG. 4, the bearing fixing part bottom wall opening 76 is an opening formed in the bearing fixing part bottom wall 70. The shaft 94 is inserted into the bearing fixing part bottom wall opening 76. The bearing fixing part bottom wall opening 76 has a circular shape on the x-y plane. In other words, the bearing fixing part bottom wall opening 76 has a circular shape when the bearing fixing part bottom wall 70 is viewed from the unload side 44 of the rotation axis Ax in the z-axis direction. The center of the bearing fixing part bottom wall opening 76 is positioned on the rotation axis Ax of the shaft 94. The diameter of the bearing fixing part bottom wall opening 76 is larger than that of a bearing mounting surface 95 of the shaft 94. With this structure, the bearing fixing part bottom wall opening 76 does not interfere with the shaft 94 when the shaft 94 rotates in the state of being inserted into the bearing fixing part bottom wall opening 76.

As illustrated in FIG. 4, the second annular plate 77 is an annular plate. The outer periphery of the second annular plate 77 is connected to the end of the second cylindrical part 54 on the load side 42. The inner periphery of the second annular plate 77 is connected to the end of the bearing fixing part side wall 64 on the load side 42. The second annular plate 77 has a second annular plate inner surface 78 and a second annular plate outer surface 79. The second annular plate inner surface 78 is the surface of the second annular plate 77 on the load side 42. The second annular plate outer surface 79 is the surface of the second annular plate 77 on the unload side 44. A position L5 illustrated in FIGS. 4 and 5 indicates the position of the second annular plate outer surface 79 in the z-axis direction.

As illustrated in FIG. 3, the flange 58 is formed at the end of the first cylindrical part 46 on the load side 42. As illustrated in FIG. 3, the flange 58 has a flange bolt hole 60. The flange bolt hole 60 is a hole into which a bolt is inserted to fix the front bracket 82 to the housing 40.

As illustrated in FIG. 3, the front bracket 82 is a lid that covers the housing 40 on the load side 42. The front bracket 82 has a bracket bolt hole 84, a bearing press-fit recess 86, and a bracket opening 88.

The bracket bolt hole 84 is a hole to which the bolt is fastened to fix the front bracket 82 to the housing 40. Screw cutting is performed with a tap on the bracket bolt hole 84. The front bracket 82 is fixed to the housing 40 by inserting the bolt into the flange bolt hole 60 and fastening the bolt to the bracket bolt hole 84. The method for fixing the front bracket 82 to the housing 40 is not limited thereto.

The bearing press-fit recess 86 is a circular columnar recess formed in the front bracket 82. The bearing press-fit recess 86 is a recess into which the load-side bearing 90 is press-fit. The bearing press-fit recess 86 has a circular shape when the front bracket 82 is viewed from the load side 42 of the rotation axis Ax. The bearing press-fit recess 86 is formed with the central axis of the circular columnar recess of the bearing press-fit recess 86 positioned coaxially with the rotation axis Ax of the shaft 94 when the front bracket 82 is fixed to the housing 40. The diameter of the bearing press-fit recess 86 is slightly smaller than the outer diameter of the load-side bearing 90.

The bracket opening 88 is an opening formed at the center of the front bracket 82. The bracket opening 88 is an opening into which the shaft 94 is inserted. The bracket opening 88 has a circular shape. In other words, the bracket opening 88 has a circular shape when the front bracket 82 is viewed from the load side 42 of the rotation axis Ax. The bracket opening 88 is formed with the center of the opening overlapping the rotation axis Ax of the shaft 94 when the front bracket 82 is fixed to the housing 40. The diameter of the bracket opening 88 is larger than that of the shaft 94. In other words, the bracket opening 88 does not interfere with the shaft 94 when the shaft 94 rotates in the state of being inserted into the bracket opening 88.

The load-side bearing 90 is a ball bearing that rotatably supports the shaft 94. The outer diameter of the load-side bearing 90 is slightly larger than the diameter of the bearing press-fit recess 86. The load-side bearing 90 is press-fit into the bearing press-fit recess 86, thereby being fixed to the bearing press-fit recess 86. The load-side bearing 90 has an inner peripheral surface 90a and an outer peripheral surface 90b. The inner peripheral surface 90a is the surface of the inner ring in contact with the shaft 94. The outer peripheral surface 90b is the surface of the outer ring in contact with the bearing press-fit recess 86. The inner peripheral surface 90a of the load-side bearing 90 is parallel to the outer peripheral surface 90b. While the load-side bearing 90 is a ball bearing, it is not limited thereto. The load-side bearing 90 simply needs to rotatably support the shaft 94 and may be a needle bearing, for example. While the load-side bearing 90 is press-fit into the bearing press-fit recess 86, the method for fixing the load-side bearing 90 is not limited thereto.

As illustrated in FIGS. 3 and 4, the unload-side bearing 92 is a ball bearing that rotatably supports the shaft 94. The outer diameter of the unload-side bearing 92 is slightly larger than the inner diameter of the bearing fixing part 62. The unload-side bearing 92 is press-fit into the bearing fixing part 62, thereby being fixed to the housing 40. The unload-side bearing 92 has an inner peripheral surface 92a and an outer peripheral surface 92b. The inner peripheral surface 92a is the surface of the inner ring in contact with the shaft 94. The outer peripheral surface 92b is the surface of the outer ring in contact with the bearing fixing part side wall inner surface 66. The inner peripheral surface 92a of the unload-side bearing 92 is parallel to the outer peripheral surface 92b. A position L6 illustrated in FIG. 4 indicates the position of the inner peripheral surface 92a of the unload-side bearing 92 in the radial direction of the rotation axis Ax. While the unload-side bearing 92 is a ball bearing, it is not limited thereto. The unload-side bearing 92 simply needs to rotatably support the shaft 94 and may be a needle bearing, for example. While the unload-side bearing 92 is press-fit into the bearing fixing part 62, the method for fixing the unload-side bearing 92 is not limited thereto.

As illustrated in FIG. 3, the shaft 94 is a rotating shaft of the electric motor 31. The shaft 94 on the load side 42 is rotatably supported by the load-side bearing 90. The shaft 94 on the unload side 44 is rotatably supported by the unload-side bearing 92. A screw hole 94a is formed at the end of the shaft 94 on the unload side 44.

As illustrated in FIG. 4, the shaft 94 has the bearing mounting surface 95. The bearing mounting surface 95 is parallel to the rotation axis Ax of the shaft 94. The bearing mounting surface 95 is in contact with the inner peripheral surface 90a of the load-side bearing 90. The bearing mounting surface 95 is in contact with the inner peripheral surface 92a of the unload-side bearing 92. The shaft 94 is press-fit into the load-side bearing 90 and the unload-side bearing 92. As illustrated in FIG. 3, the shaft 94 is connected to the rotor 96. The shaft 94 rotates integrally with the rotor 96.

As illustrated in FIG. 3, the rotor 96 includes a yoke 98 and a magnet 100. The yoke 98 is produced by laminating thin sheets, such as electromagnetic steel sheets and cold-rolled steel sheets, by bonding, bossing, caulking, or other methods. The yoke 98 has a hollow cylindrical shape. The yoke 98 is fixed to the shaft 94 by press-fitting the shaft 94 into the hollow part, for example. The shaft 94 and the yoke 98 may be integrally formed.

As illustrated in FIG. 3, a plurality of magnets 100 are fixed to the surface of the yoke 98 along the circumferential direction. The magnets 100 are permanent magnets, and the south pole and the north pole are alternately disposed at regular intervals in the circumferential direction of the yoke 98. In the rotor 96, the south pole and the north pole are alternately disposed in the circumferential direction of the yoke 98 on the outer peripheral side of the yoke 98. While the number of poles of the rotor 96 is eight, for example, it is not limited thereto.

As illustrated in FIG. 3, the stator 102 has a tubular shape so as to surround the rotor 96 inside the housing 40. The stator 102, for example, is fitted and attached to the first cylindrical part inner peripheral surface 48 of the housing 40. The central axis of the stator 102 coincides with the rotation axis Ax of the shaft 94. The stator 102 includes a tubular stator core 104 and a coil 106. The stator core 104 is an iron core. The coil 106 is wound around the stator core 104.

As illustrated in FIG. 3, the bus bar 112 is a long and thin rod-like metal. The bus bar 112 is electrically connected to a power conditioner, which is not illustrated, of the ECU 10. The bus bar 112 is electrically connected to the coil 106. In other words, the bus bar 112 is a terminal that electrically connects the circuit substrate 11 (refer to FIG. 2) of the ECU 10 and the coil 106.

As illustrated in FIG. 4, the rotation angle sensor part 16 includes: the sensor chip 114; a sensor substrate 126 on which the sensor chip 114 is mounted; the holder 134 to which the sensor substrate 126 is fixed; and the holder cover 146.

As illustrated in FIG. 4, the harness 18 includes a cable cover 19 and a harness-side connector 20. The cable cover 19 is a member that guides the harness 18 to a substrate-side connector 128. The harness-side connector 20 is connected to the substrate-side connector 128.

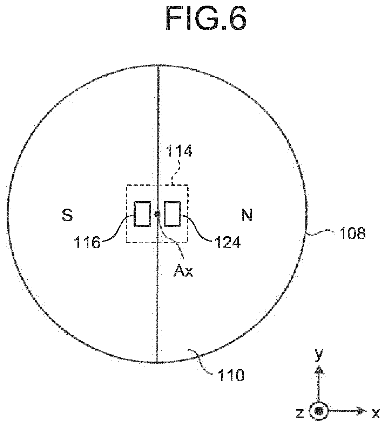

FIG. 6 is a diagram for explaining the positional relation between the permanent magnet, a first sensor, and a second sensor according to the first embodiment. FIG. 6 does not illustrate the configuration other than the permanent magnet 108 and the sensor chip 114. FIG. 6 illustrates the relative positional relation between the rotation axis Ax, the sensor chip 114, and the permanent magnet 108 when the sensor chip 114 is viewed from the unload side 44 in the z-axis direction.

As illustrated in FIG. 6, the permanent magnet 108 is a disc-shaped magnet. As illustrated in FIGS. 4 and 6, the permanent magnet 108 has a surface 110. The surface 110 is the surface of the permanent magnet 108 on the unload side 44. As illustrated in FIG. 4, the permanent magnet 108 is fixed to the end of the shaft 94 on the unload side 44 with the fixing part 109 interposed therebetween. The permanent magnet 108 is fixed such that the surface 110 is orthogonal to the rotation axis Ax of the shaft 94, for example. The permanent magnet 108 is fixed such that the center of the disk shape of the permanent magnet 108 is positioned on the rotation axis Ax. The permanent magnet 108 illustrated in FIG. 6 is magnetized such that the south pole and the north pole are disposed side by side in a direction orthogonal to the rotation axis Ax of the shaft 94, for example. While the permanent magnet 108 is magnetized such that the south pole and the north pole are disposed side by side in a direction orthogonal to the rotation axis Ax, the present embodiment is not limited thereto. The magnetization pattern of the permanent magnet 108 may be appropriately selected depending on a type of the sensor.

As illustrated in FIG. 4, the fixing part 109 includes a magnet holding part 109a and a tubular part 109b. The fixing part 109 is made of a non-magnetic material. The magnet holding part 109a is a disc-shaped member. The magnet holding part 109a has a first recess 109c, a second recess 109d, and a through hole 109e. The first recess 109c is recessed toward the load side 42 with respect to the surface of the magnet holding part 109a on the unload side 44. The first recess 109c is provided with the permanent magnet 108. The permanent magnet 108 is fixed to the first recess 109c with an adhesive, for example. The second recess 109d is recessed toward the load side 42 with respect to the bottom surface of the first recess 109c. The through hole 109e penetrates through the bottom surface of the second recess 109d, extending in parallel to the rotation axis Ax.

The tubular part 109b is a tubular member, into which the end of the shaft 94 on the unload side 44 is inserted. The end of the tubular part 109b on the unload side 44 is connected to the magnet holding part 109a. The magnet holding part 109a and the tubular part 109b are integrally formed. The fixing part 109 is fixed to the shaft 94 by a fixing screw 113 being fastened to the screw hole 94a in a state where the fixing screw 113 penetrates through the through hole 109e.

As illustrated in FIG. 6, the sensor chip 114 includes a first sensor 116 and a second sensor 124. The sensor chip 114 is a magnetic sensor integrating the first sensor 116 and the second sensor 124. As illustrated in FIG. 4, the sensor chip 114 is mounted on the surface of the sensor substrate 126 on the load side 42. The sensor chip 114 is mounted at the center of the sensor substrate 126. The center of the sensor substrate 126 is a position at which the rotation axis Ax of the shaft 94 intersects the sensor substrate 126 when the rotation angle sensor part 16 is mounted on the electric motor 31.

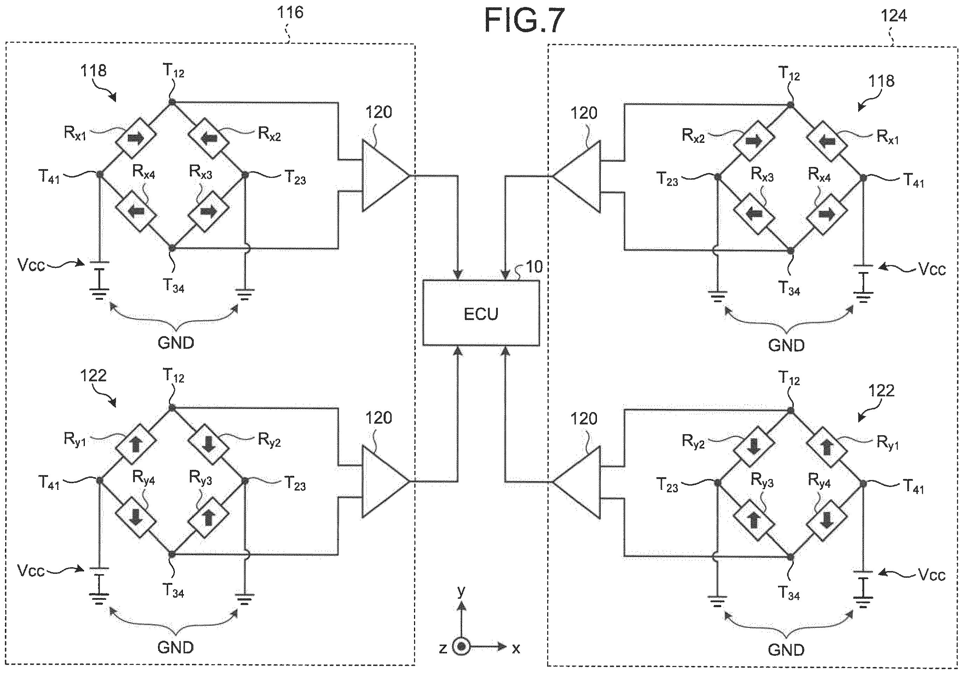

FIG. 7 is a circuit diagram of a circuit configuration of the sensor chip according to the first embodiment. As illustrated in FIG. 7, the first sensor 116 includes a first direction detection circuit 118 and a second direction detection circuit 122. The first sensor 116 outputs a detected voltage detected by each of the first direction detection circuit 118 and the second direction detection circuit 122 to the ECU 10.

The first direction detection circuit 118 includes MR elements Rₓ₁, Rₓ₂, Rₓ₃, and Rₓ₄, connection terminals T₁₂, T₂₃, T₃₄, and T₄₁, and an amplifier 120. The MR elements Rₓ₁, Rₓ₂, Rₓ₃, and Rₓ₄ are tunnel magneto resistance (TMR) elements. The MR elements Rₓ₁, Rₓ₂, Rₓ₃, and Rₓ₄ may be any ones of giant magneto resistance (GMR) elements, anisotropic magneto resistance (AMR) elements, and hall elements, for example.

A TMR element consists of: a magnetization fixed layer in which a magnetization direction is fixed; a free layer in which the direction of magnetization changes depending on an external magnetic field; and a non-magnetic layer disposed between the magnetization fixed layer and the free layer. The TMR element has a resistance varying depending on an angle formed by a magnetization direction in the free layer with a magnetization direction in the magnetization fixed layer. If the angle is 0°, for example, the resistance is the smallest. If the angle is 180°, the resistance is the largest. The arrows illustrated in the MR elements Rₓ₁, Rₓ₂, Rₓ₃, and Rₓ₄ in FIG. 7 indicate the magnetization directions of the respective magnetization fixed layers. As illustrated in FIG. 7, the MR elements Rₓ₁, Rₓ₂, Rₓ₃, and Rₓ₄ form a bridge circuit.

The connection terminals T₁₂ and T₃₄ are connected to the amplifier 120. The connection terminal T₄₁ is connected to a drive voltage Vcc. While the drive voltage Vcc is illustrated in FIG. 7 as being provided independently of the ECU 10 for convenience, it is a voltage supplied from the ECU 10. As illustrated in FIG. 7, the connection terminal T₂₃ is connected to a ground GND. The ECU 10 applies a voltage between the connection terminal T₄₁ and the connection terminal T₂₃ via the harness 18.

The amplifier 120 is an amplification circuit that amplifies input electric signals. The input side of the amplifier 120 is connected to the connection terminals T₁₂ and T₃₄. The output side of the amplifier 120 is connected to the ECU 10. The amplifier 120 amplifies detection signals input from the connection terminals T₁₂ and T₃₄ and outputs them to the ECU 10.

The second direction detection circuit 122 includes MR elements R_{y1}, R_{y2}, R_{y3}, and R_{y4}, connection terminals T₁₂, T₂₃, T₃₄, and T₄₁, and the amplifier 120. The second direction detection circuit 122 includes the MR elements R_{y1}, R_{y2}, R_{y3}, and R_{y4} instead of the MR elements Rₓ₁, Rₓ₂, Rₓ₃, and Rₓ₄. Among the components of the second direction detection circuit 122, the same components as those of the first direction detection circuit 118 are denoted by like reference numerals, and explanation thereof is omitted.

The MR elements R_{y1}, R_{y2}, R_{y3}, and R_{y4} have the same configuration as that of the MR elements Rₓ₁, Rₓ₂, Rₓ₃, and Rₓ₄ other than the magnetization direction of the magnetization fixed layer. The arrows illustrated in the MR elements R_{y1}, R_{y2}, R_{y3}, and R_{y4} indicate the magnetization directions of the respective magnetization fixed layers.

The second sensor 124 has a configuration similar to that of the first sensor 116. The similar components are denoted by like reference numerals, and explanation thereof is omitted.

If the first direction detection circuit 118 and the second direction detection circuit 122 are disposed at a predetermined distance with respect to the rotation axis Ax illustrated in FIG. 6, they can output accurate detection signals. If the first sensor 116 has a predetermined relation with the surface 110 of the permanent magnet 108, it can output predetermined detection signals. As described above, the first sensor 116 needs to be disposed at a predetermined position with respect to the rotation axis Ax and the surface 110 of the permanent magnet 108. Similarly, the second sensor 124 needs to be disposed at a predetermined position with respect to the rotation axis Ax and the surface 110 of the permanent magnet 108.

When the rotation angle sensor part 16 is mounted on the electric motor 31, the first sensor 116 and the second sensor 124 are fixed at the predetermined positions with respect to the rotation axis Ax and the surface 110 of the permanent magnet 108. As illustrated in FIG. 6, the predetermined positions with respect to the rotation axis Ax are positions where the first sensor 116 and the second sensor 124 are disposed away from each other at a certain distance across the rotation axis Ax. The certain distance is equal to or smaller than the radius of the surface 110 of the permanent magnet 108. As illustrated in FIG. 4, the predetermined positions with respect to the surface 110 of the permanent magnet 108 are positions where a distance d6 between a position L10 of the sensor chip 114 including the first sensor 116 and the second sensor 124 and a position L9 of the surface 110 of the permanent magnet 108 is a predetermined distance.

As illustrated in FIGS. 3 and 4, the permanent magnet 108 is accommodated inside the second cylindrical part 54 in the radial direction.

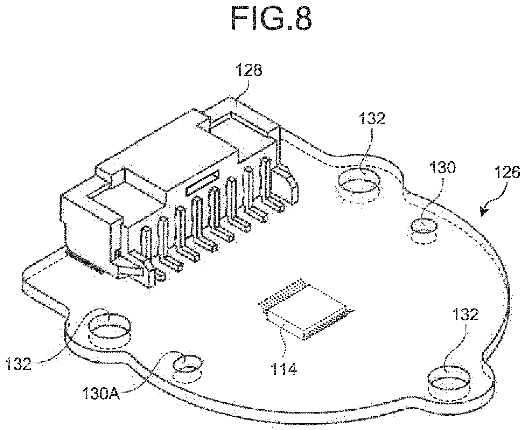

FIG. 8 is a perspective view of the sensor substrate according to the first embodiment. As illustrated in FIG. 8, the sensor substrate 126 is a substrate on which the sensor chip 114 is mounted. The sensor substrate 126 includes the substrate-side connector 128, positioning holes 130 and 130A, and through holes 132, 132, and 132.

The substrate-side connector 128 is a connector to which the harness-side connector 20 is connected. As illustrated in FIG. 4, the substrate-side connector 128 is mounted on the surface of the sensor substrate 126 on the unload side 44. The substrate-side connector 128 electrically connects the harness 18 and circuit wiring, which is not illustrated. The non-illustrated circuit wiring is a circuit pattern that electrically connects the substrate-side connector 128 to the first sensor 116 and the second sensor 124.

The positioning holes 130 and 130A are formed in the sensor substrate 126. To fix the sensor substrate 126 to the holder 134, positioning columns 136 and 136 formed on the holder 134 are inserted into the positioning holes 130 and 130A, respectively. The positioning hole 130A is an elongated hole that is long in one direction and short in another direction. This structure facilitates insertion of the positioning columns 136 and 136 into the positioning holes 130 and 130A, respectively. The positioning columns 136 and 136 will be described later.

The through holes 132, 132, and 132 are openings formed in the sensor substrate 126. As illustrated in FIG. 8, the through holes 132, 132, and 132 are formed at respective three positions. The through holes 132, 132, and 132 penetrate in a direction parallel to the rotation axis Ax.

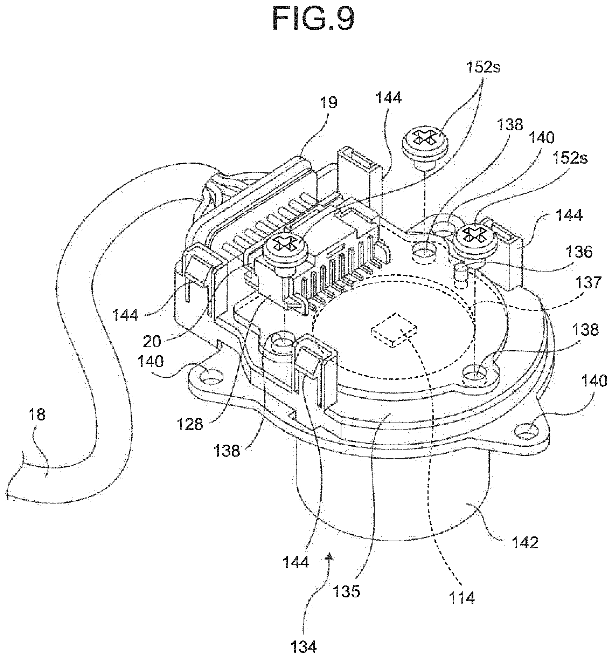

FIG. 9 is a perspective view of the holder according to the first embodiment. As illustrated in FIG. 9, the holder 134 is a member that fixes the electric motor 31 and the sensor substrate 126 at respective predetermined positions and is made of resin, such as polybutylene terephthalate (PBT). The holder 134 is formed by resin molding, for example. The holder 134 includes a substrate fixing part 135 and a holder guide 142. The substrate fixing part 135 has the positioning columns 136 and 136, substrate screw holes 138, 138, and 138, through holes 140, 140, and 140, legs 141 (refer to FIG. 4), and fixing hooks 144, 144, 144, and 144.

The substrate fixing part 135 is a plate-shaped member. The substrate fixing part 135 has an opening 137 illustrated in FIG. 9 at the center. The opening 137 has a circular shape. As illustrated in FIG. 4, when the rotation angle sensor part 16 is assembled to the electric motor 31, the sensor substrate 126 is fixed to the surface of the substrate fixing part 135 on the unload side 44. A position L7 illustrated in FIG. 4 indicates the position of the surface of the substrate fixing part 135 on the load side 42 in the z-axis direction when the holder 134 is fixed to the electric motor 31.

The positioning columns 136 and 136 are circular columnar protrusions formed on the outer side in the radial direction than the opening 137 of the substrate fixing part 135. The diameter of each of the positioning columns 136 and 136 is equal to or smaller than the diameter of each of the positioning holes 130 and 130A. To fix the sensor substrate 126 to the holder 134, the positioning columns 136 and 136 are inserted into the positioning holes 130 and 130A, respectively, of the sensor substrate 126. The positioning columns 136 and 136 guide the position of the sensor substrate 126 with respect to the holder 134.

While the positioning columns 136 and 136 have a circular columnar shape, and the positioning holes 130 and 130A have a circular shape, the shapes are not limited thereto. The positioning columns 136 and 136 simply need to have a shape insertable into the positioning holes 130 and 130A, respectively. The positioning holes 130 and 130A may have a polygonal shape, for example, and the positioning columns 136 and 136 may be polygonal columnar protrusions corresponding to the shape of the positioning holes 130 and 130A.

The substrate screw holes 138, 138, and 138 are screw holes formed in the substrate fixing part 135. The substrate screw holes 138, 138, and 138 are formed at positions where their centers coincide with the centers of the respective through holes 132, 132, and 132 formed in the sensor substrate 126 when the holder 134 and the sensor substrate 126 are superposed.

Holder fixing screws 154s fastened to the respective screw holes 80 illustrated in FIG. 4 are inserted into the respective through holes 140, 140, and 140. The position of the holder 134 with respect to the housing 40 in the z-axis direction is determined by the holder fixing screws 154s fastened to the respective screw holes 80. The diameter of the through hole 140 is larger than that of the male screw of the holder fixing screw 154s. The through holes 140, 140, and 140 are formed closer to the outer periphery than the substrate fixing part 135 is to the outer periphery.

When the screw holes 80 and the respective holder fixing screws 154s are fastened, the legs 141 illustrated in FIG. 4 come into contact with the first annular plate outer surface 57. As illustrated in FIG. 4, the plurality of legs 141 is formed in a direction orthogonal to the substrate fixing part 135. As illustrated in FIG. 4, the legs 141 protrude toward the load side 42 by a distance d4 from the substrate fixing part 135. The distance d4 is the distance between the position L7 of the surface of the substrate fixing part 135 on the load side 42 and the position L1 of the first annular plate outer surface 57.

The holder guide 142 is a cylindrical member. The inner diameter of the holder guide 142 is substantially equal to the outer diameter of the bearing fixing part side wall 64. The substantially equal size means a size that allows a manufacturing tolerance. As illustrated in FIG. 4, the bearing fixing part 62 is inserted into the holder guide 142. The central axis of the cylindrical shape of the holder guide 142 coincides with the central axis of the opening 137. The holder guide 142 is connected to the substrate fixing part 135 such that the central axis of the cylinder is orthogonal to both surfaces of the substrate fixing part 135. A position L8 illustrated in FIG. 4 indicates the position of the end of the holder guide 142 on the load side 42 in the z-axis direction. The length of the cylinder of the holder guide 142 is equal to a distance d5. The distance d5 illustrated in FIG. 4 is the distance between the position L7 of the surface of the substrate fixing part 135 on the load side 42 and the position L8 of the end surface of the holder guide 142 on the load side 42.

Because the distance d5 is larger than the distance d4 as illustrated in FIG. 4, the length of the cylinder of the holder guide 142 is longer than that of the legs 141. A distance d1 illustrated in FIG. 4 is the distance between the position L1 of the first annular plate outer surface 57 and the position L4 of the bearing fixing part bottom wall outer surface 74. A distance d2 illustrated in FIG. 4 is the distance between the position L4 of the bearing fixing part bottom wall outer surface 74 and the position L5 of the second annular plate outer surface 79. A distance d3 illustrated in FIG. 4 is the distance between the position L8 of the end surface of the holder guide 142 on the load side 42 and the position L5 of the second annular plate outer surface 79.

The distance d3 is smaller than a value obtained by subtracting the radius of curvature R2 illustrated in FIG. 5 from the distance d2. The distance d3 is larger than the radius of curvature R1 illustrated in FIG. 5. When the legs 141 determine the position L7 of the surface of the substrate fixing part 135 on the load side 42, the position L8 of the end surface of the holder guide 142 on the load side 42 is determined. This structure can prevent the position L8 of the end surface of the holder guide 142 on the load side 42 from coming into contact with the curved surface 68a, and allows the holder guide 142 to come into contact with a part of the bearing fixing part side wall outer surface 68 parallel to the rotation axis Ax, as illustrated in FIG. 5. The part of the bearing fixing part side wall outer surface 68 parallel to the rotation axis Ax is a part of the bearing fixing part side wall outer surface 68 positioned closer to the unload side 44 than the position L5 is to the unload side 44 by equal to or larger than the radius of curvature R1 and positioned closer to the load side 42 than the position L4 is to the load side 42 by equal to or larger than the radius of curvature R2.

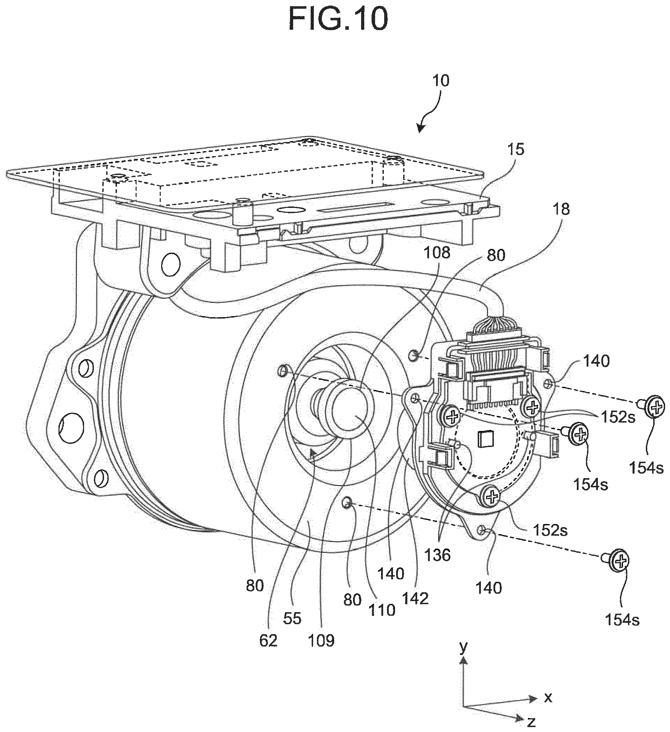

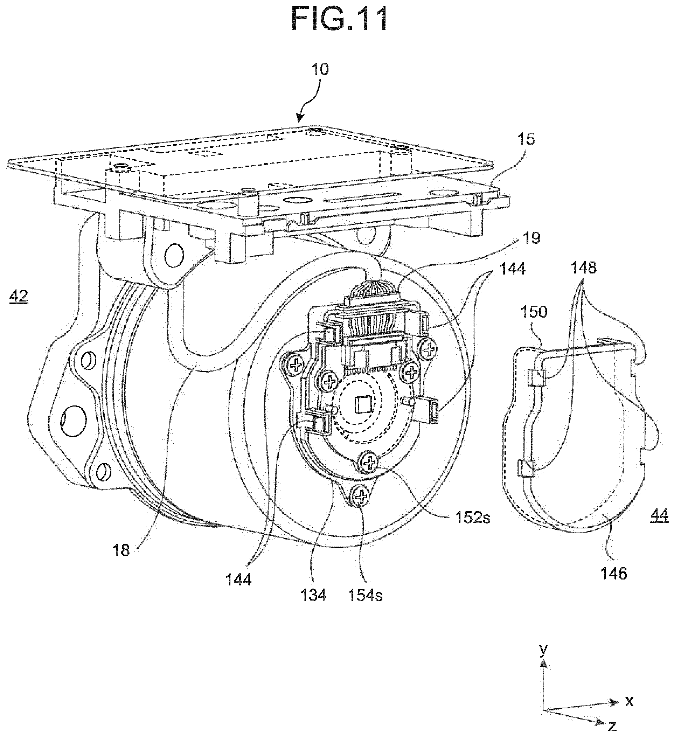

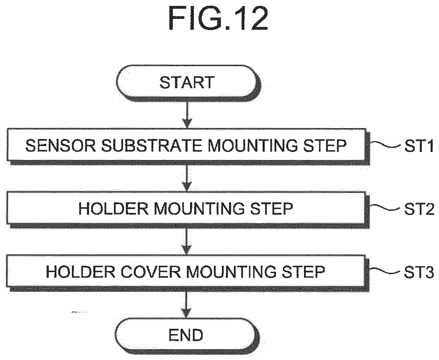

FIG. 10 is an exploded perspective view of the electric motor and the holder according to the first embodiment. FIG. 11 is an exploded perspective view of the holder and the holder cover according to the first embodiment. FIG. 12 is a flowchart of a procedure for assembling the assembly structure of the sensor and the electric motor including the assembly structure of the sensor according to the first embodiment. The following describes a method for assembling the rotation angle sensor part 16 to the electric motor 31 with reference to FIGS. 4, 9, 10, 11, and 12.

As illustrated in FIG. 12, the method for assembling the electric motor 31 and the rotation angle sensor part 16 according to the present embodiment includes a sensor substrate mounting step ST1, a holder mounting step ST2, and a holder cover mounting step ST3.

At the sensor substrate mounting step ST1, as illustrated in FIG. 9, a worker inserts the harness-side connector 20 into the substrate-side connector 128 first. Subsequently, the worker inserts the positioning columns 136 and 136 into the positioning holes 130 and 130A, respectively, formed in the sensor substrate 126. Subsequently, the worker fastens the substrate fixing screws 152s, 152s, and 152s to the respective substrate screw holes 138, 138, and 138. As a result, the relative position between the sensor substrate 126 and the substrate fixing part 135 is accurately determined.

At the holder mounting step ST2, as illustrated in FIG. 10, the worker attaches the holder guide 142 to the bearing fixing part 62 formed in the housing 40 first. As illustrated in FIG. 4, the worker thrusts the holder guide 142 until the legs 141 come into contact with the first annular plate outer surface 57. Consequently, the holder guide 142 comes into contact with the part of the bearing fixing part side wall outer surface 68 parallel to the rotation axis Ax. As a result, the position of the holder 134 in the radial direction is determined by the bearing fixing part side wall outer surface 68.

As illustrated in FIG. 10, the screw holes 80, 80, and 80 are formed at different angles by 120 degrees with respect to the rotation axis Ax. Subsequently, at the holder mounting step ST2, the worker fastens the holder fixing screws 154s, 154s, and 154s to the respective screw holes 80, 80, and 80 through the respective through holes 140, 140, and 140 as illustrated in FIGS. 4 and 10. The diameter of the through holes 140, 140, and 140 is larger than that of the male screws of the holder fixing screws 154s, 154s, and 154s. This structure can lower the possibility of positional deviation of the holder 134 caused by fastening the holder fixing screws 154s, 154s, and 154s.

At the holder cover mounting step ST3, as illustrated in FIG. 11, the worker inserts the fixing hooks 144, 144, 144, and 144 into respective fixing openings 148, 148, 148, and 148, thereby fixing the holder cover 146 to the holder 134.

The fixing hooks 144, 144, 144, and 144 are hooks formed on the end surface of the holder 134 on the unload side 44. The fixing hooks 144, 144, 144, and 144 protrude toward the unload side 44.

The holder cover 146 covers the sensor substrate 126 fixed to the holder 134. As illustrated in FIG. 11, the holder cover 146 has the fixing openings 148, 148, 148, and 148 and a cable guide opening 150. The fixing hooks 144, 144, 144, and 144 formed on the holder 134 are inserted and fixed to the respective fixing openings 148, 148, 148, and 148.

As illustrated in FIG. 4, the assembly structure 200 of the sensor according to the present embodiment includes the shaft 94, the permanent magnet 108, the unload-side bearing 92, the bearing fixing part 62, the sensor chip 114, and the holder 134.

As described above, the housing 40 is integrally formed by press working. In press working, the shape of the housing 40 is formed along the shape of a die. The shape of the die is created with a significantly small error. Consequently, the first cylindrical part 46 and the bottom wall 52 are formed with high accuracy. The first annular plate outer surface 57, the bearing fixing part side wall inner surface 66, and the bearing fixing part side wall outer surface 68 are made flat by press working. The bearing fixing part side wall inner surface 66 and the bearing fixing part side wall outer surface 68 are made orthogonal to the first annular plate outer surface 57 by press working with high accuracy.

The unload-side bearing 92 is press-fit into the bearing fixing part 62. In other words, the outer peripheral surface 92b of the unload-side bearing 92 is fixed with pressure to the bearing fixing part side wall inner surface 66. As a result, the outer peripheral surface 92b of the unload-side bearing 92 is made parallel to the bearing fixing part side wall inner surface 66. The shaft 94 is press-fit into the inner peripheral surface 92a of the unload-side bearing 92. In other words, the shaft 94 is fixed with pressure to the inner peripheral surface 92a of the unload-side bearing 92. As a result, the bearing mounting surface 95 of the shaft 94 is made parallel to the inner peripheral surface 92a of the unload-side bearing 92. The inner peripheral surface 92a of the unload-side bearing 92 is parallel to the outer peripheral surface 92b. The bearing mounting surface 95 is parallel to the rotation axis Ax of the shaft 94. Consequently, the central axis of the cylinder of the bearing fixing part 62, the unload-side bearing 92, and the rotation axis Ax of the shaft 94 are coaxially disposed.

The inner diameter of the holder guide 142 is equal to the diameter of the bearing fixing part side wall outer surface 68. The bearing fixing part 62 is inserted into the holder guide 142. As a result, the inner peripheral surface of the holder guide 142 comes into contact with the bearing fixing part side wall outer surface 68, thereby determining the position of the holder guide 142 with respect to the bearing fixing part 62 in the radial direction.

The holder guide 142 determines the assembly position of the holder 134 by the bearing fixing part side wall outer surface 68 formed by press working with high accuracy. If the assembly position of the holder 134 is determined with high accuracy, the position of the substrate fixing part 135 is determined. Because the sensor substrate 126 is fixed to the substrate fixing part 135, the positions of the first sensor 116 and the second sensor 124 are determined. As a result, the first sensor 116 is disposed at the predetermined position with respect to the rotation axis Ax and the surface 110 of the permanent magnet 108. Similarly, the second sensor 124 is disposed at the predetermined position with respect to the rotation axis Ax and the surface 110 of the permanent magnet 108.

As described above, when the assembly position of the holder 134 and the bearing fixing part 62 is determined by the bearing fixing part side wall outer surface 68 serving as the outer peripheral surface of the bearing fixing part 62, the central axis of the cylinder of the holder guide 142 and the rotation axis Ax of the shaft 94 are coaxially disposed. If the position of the holder guide 142 in the radial direction is accurately determined, the sensor chip 114 is disposed at the predetermined position with respect to the rotation axis Ax as illustrated in FIG. 6. As a result, errors in the rotation angle of the shaft 94 detected by the sensor chip 114 are reduced.

The holder guide 142 is connected to the substrate fixing part 135 such that the central axis of the cylinder is orthogonal to both surfaces of the substrate fixing part 135. The positioning columns 136 and 136 are inserted into the positioning holes 130 and 130A, respectively, of the sensor substrate 126 having a plate shape. As a result, the position with respect to the substrate fixing part 135 is guided. The sensor substrate 126 is fixed to the substrate fixing part 135 having a plate shape. The sensor chip 114 is mounted on the sensor substrate 126. As a result, the substrate fixing part 135 and the sensor substrate 126 are disposed at positions orthogonal to the rotation axis Ax. The sensor chip 114 is disposed at a predetermined position on a plane orthogonal to the rotation axis Ax of the shaft 94. This structure reduces errors in inclination of the sensor chip 114 with respect to the surface 110 of the permanent magnet 108. As a result, errors in the rotation angle of the shaft 94 detected by the sensor chip 114 are reduced.

As described above, in the assembly structure 200 of the sensor, the first sensor 116 or the second sensor 124 is disposed at the predetermined position with respect to the rotation axis Ax and the surface 110 of the permanent magnet 108. This structure can improve the accuracy in assembling the rotation angle sensor part 16 and the electric motor 31. As a result, errors in the rotation angle of the shaft 94 detected by the first sensor 116 or the second sensor 124 are reduced.

In the assembly structure 200 of the sensor according to the first embodiment, the first sensor 116 and the second sensor 124 include TMR elements. Redundancy of resolvers requires a plurality of resolvers mounted in a direction parallel to the rotation axis Ax, which increases the size and the cost. By contrast, the assembly structure 200 of the sensor according to the present embodiment allows the sensor chip 114 to be mounted at a position closer to the unload-side bearing 92, thereby allowing downsizing of the rotation angle sensor part 16. As a result, the assembly structure 200 of the sensor according to the present embodiment can be manufactured at a lower cost and have higher mountability of the sensor on the electric motor 31.

The electric motor 31 provided with the assembly structure 200 of the sensor according to the first embodiment can accurately determine the assembly position of the holder 134 by the outer peripheral surface of the bearing fixing part 62. The bearing fixing part 62 can rotatably support the shaft 94 of the electric motor 31 on the inner peripheral surface with the unload-side bearing 92 interposed therebetween. With this structure, the permanent magnet 108 and at least one of the first sensor 116 and the second sensor 124 are positioned using the rotation axis Ax of the shaft 94 of the electric motor 31 as a reference. As a result, errors in the rotation angle of the shaft 94 detected by at least one of the first sensor 116 and the second sensor 124 are reduced. The electric power steering device 1 provided with the assembly structure 200 of the sensor can prevent a driver from feeling a sense of incongruity.

Typically, if an MR sensor (e.g., an AMR sensor, a GMR sensor, and a TMR sensor) is used to detect rotation of a motor, the detection accuracy may possibly be significantly deteriorated because of its misalignment with the shaft of the motor.

To address this, the assembly structure 200 of the sensor according to the first embodiment includes the shaft 94 and the housing 40 that includes the first cylindrical part 46 and the first annular plate 55. The first annular plate 55 is a plate having an annular shape, the outer periphery of which is connected to the end of the first cylindrical part 46 and orthogonal to the rotation axis Ax of the shaft 94. The assembly structure 200 of the sensor includes: the permanent magnet 108 that is accommodated inside the first cylindrical part 46 in the radial direction and fixed to the end of the shaft 94; and the first sensor 116 and the second sensor 124 that detect rotation of the permanent magnet 108. The assembly structure 200 of the sensor includes the holder 134 that is fixed to the first annular plate 55 and that holds the first sensor 116 and the second sensor 124 such that the first sensor 116 and the second sensor 124 are disposed at the predetermined positions with respect to the permanent magnet 108.

With this structure, the holder 134 that holds the first sensor 116 and the second sensor 124 at the predetermined positions with respect to the permanent magnet 108 are fixed to the first annular plate 55. In other words, the positions of the first sensor 116 and the second sensor 124 and the permanent magnet 108 are fixed with respect to the housing 40. Consequently, if vibrations or the like are applied to the assembly structure 200 of the sensor, the positional relation between the first sensor 116 and the second sensor 124 and the permanent magnet 108 is less likely to be changed. As a result, errors in the rotation angle of the shaft 94 detected by the first sensor 116 and the second sensor 124 are reduced.

The assembly structure 200 of the sensor according to the first embodiment includes the unload-side bearing 92 including: the outer ring; and the inner ring fixed to the shaft 94. The housing 40 further includes the bearing fixing part 62 having a cylindrical shape, and the inner peripheral surface of which fixes the outer ring of the unload-side bearing 92. The assembly position of the holder 134 with respect to the bearing fixing part 62 is determined by the outer peripheral surface of the bearing fixing part 62 such that the first sensor 116 and the second sensor 124 are disposed at the predetermined positions with respect to the permanent magnet 108.

The assembly structure 200 of the sensor according to the first embodiment includes the sensor substrate 126 on which the first sensor 116 and the second sensor 124 are mounted. The holder 134 has the substrate fixing part 135 and the holder guide 142. The substrate fixing part 135 is a plate-shaped member to which the sensor substrate 126 is fixed. The holder guide 142 has a cylindrical shape, and fixes the substrate fixing part 135 such that the inner peripheral surface of the cylinder is in contact with the outer peripheral surface (bearing fixing part side wall outer surface 68) of the bearing fixing part 62 and that the substrate fixing part 135 is orthogonal to the rotation axis Ax.

In the assembly structure 200 of the sensor according to the first embodiment, the sensor substrate 126 has the positioning holes 130 and 130A. The substrate fixing part 135 has the positioning columns 136 and 136 (protrusions) on the surface to which the sensor substrate 126 is fixed. The positioning columns 136 and 136 are inserted into the positioning holes 130 and 130A, respectively, of the sensor substrate 126. As a result, the position of the sensor substrate 126 with respect to the substrate fixing part 135 is guided.

In the assembly structure 200 of the sensor according to the first embodiment, the sensor chip 114 is any one of a tunnel magneto resistive effect (TMR) sensor, an anisotropic magneto resistive effect (AMR) sensor, and a giant magneto resistive effect (GMR) sensor. Consequently, the sensor chip 114 can detect rotation of the permanent magnet 108 that rotates integrally with the shaft 94.

In the assembly structure 200 of the sensor according to the first embodiment, the sensor chip 114 includes a plurality of sensors (the first sensor 116 and the second sensor 124), and the holder 134 holds the sensors. Because the sensors are made redundant, the sensors that detect the rotation phase of the electric motor 31 can be divided into two systems. Even if one of the first sensor 116 and the second sensor 124 fails, the rotation phase signal SY can be transmitted to the ECU 10. If the first sensor 116 fails, for example, the second sensor 124 can keep detecting the rotation angle of the shaft 94. As a result, the reliability of the electric power steering device 1 can be improved.

While the rotation angle sensor part 16 outputs the rotation phase signal SY to the ECU 10 in the assembly structure 200 of the sensor according to the first embodiment and the electric motor 31 provided with the assembly structure 200 of the sensor, the present embodiment is not limited thereto. The rotation angle sensor part 16 may have a structure, for example, in which it internally has an arithmetic circuit that converts the analog rotation phase signal SY output from the first sensor 116 and the second sensor 124 into a rotation phase value θ and that outputs the rotation phase value θ to the ECU 10.

While the inner diameter of the holder guide 142 is equal to the outer diameter of the bearing fixing part 62 in the assembly structure 200 of the sensor according to the first embodiment and the electric motor 31 provided with the assembly structure 200 of the sensor, the present embodiment is not limited thereto. The holder guide 142, for example, may have an inner diameter slightly smaller than the outer diameter of the bearing fixing part 62 and have a plurality of slits extending in a direction parallel to the rotation axis Ax. With this structure, the holder guide 142 can be attached to the bearing fixing part 62 with the slits in the holder guide 142 slightly widening. As a result, the holder guide 142 can be attached more tightly to the bearing fixing part side wall outer surface 68. Consequently, the holder guide 142 can hold the bearing fixing part side wall outer surface 68 more reliably, thereby preventing the holder guide 142 from shifting from the predetermined fixed position.

### First modification of the first embodiment

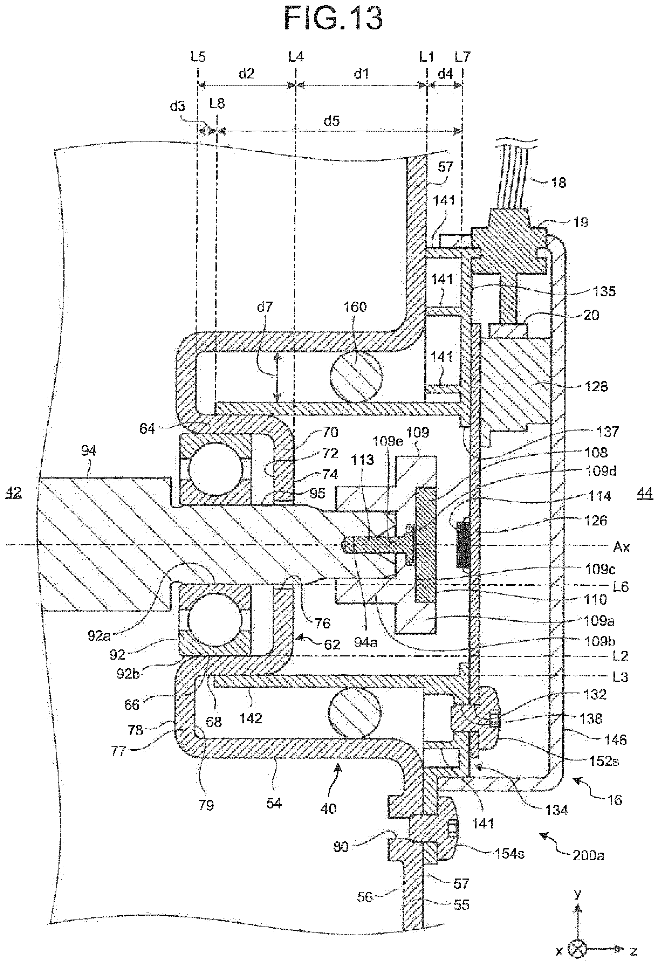

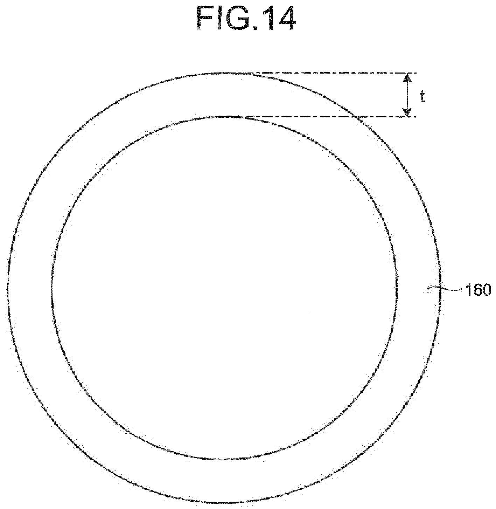

FIG. 13 is a sectional view schematically illustrating, in an enlarged manner, a section of the assembly structure of the sensor according to a first modification of the first embodiment. FIG. 14 is a plan view schematically illustrating a sealing member according to the first modification of the first embodiment. The same components as those described in the embodiment above are denoted by like reference numerals, and overlapping explanation thereof is omitted.

A sealing member 160 illustrated in FIG. 14 is a plan view of the sealing member 160 in a natural state. The natural state of the sealing member 160 is a state where no force for compressing and extending the sealing member 160 is applied to the sealing member 160. As illustrated in FIGS. 13 and 14, the sealing member 160 is an annular elastic member disposed in a space between the holder guide 142 and the second cylindrical part 54. The sealing member 160 is an O-ring, for example. A distance d7 illustrated in FIG. 13 is the distance from the holder guide 142 to the second cylindrical part 54. A thickness t illustrated in FIG. 14 is the diameter of the sealing member 160 in the natural state. The thickness t is larger than the distance d7.

Typically, the EUC 10 and the electric motor 31 are used under an environment exposed to rainwater and dust. The ECU 10 is provided with precision equipment, such as the sensor chip 114, inside thereof. If the sensor chip 114 fails by intrusion of water, dust, and other foreign matter, the ECU 10 may become unable to drive the electric motor 31. Furthermore, the holder 134 made of resin and the housing 40 made of metal have different coefficients of thermal expansion. Consequently, heat generated in the electric motor 31 may possibly form a gap between the holder guide 142 and the bearing fixing part side wall 64, thereby allowing water, dust, and other foreign matter to intrude into the holder guide 142.

To address this, in an assembly structure 200a of a sensor according to the first modification of the first embodiment, the second cylindrical part 54 has a cylindrical shape and is disposed between the first cylindrical part 46 and the bearing fixing part 62, and the end of the cylinder is connected to the inner periphery of the first annular plate 55. The sealing member 160 is in contact with the outer peripheral surface of the holder guide 142 and the inner peripheral surface of the second cylindrical part 54 along the circumferential direction. With this structure, the sealing member 160 can prevent water, dust, and other foreign matter from intruding from a gap between the first annular plate outer surface 57 and the holder 134 into the holder guide 142. As a result, the sealing member 160 can prevent a failure of the sensor chip 114 due to water and dust.

In the assembly structure 200a of the sensor according to the first modification of the first embodiment, the sealing member 160 is an annular elastic member having a thickness in the natural state larger than the distance between the holder guide 142 and the second cylindrical part 54. In other words, the thickness t of the sealing member 160 illustrated in FIG. 14 is larger than the distance d7 illustrated in FIG. 13. With this structure, as illustrated in FIG. 13, the sealing member 160 is elastically deformed and disposed between the holder guide 142 and the second cylindrical part 54. Consequently, the sealing member 160 can be in tight contact with the outer peripheral surface of the holder guide 142 and the inner peripheral surface of the second cylindrical part 54 along the circumferential direction. With this structure, the sealing member 160 can further prevent water, dust, and other foreign matter from intruding from the gap between the first annular plate outer surface 57 and the holder 134 into the holder guide 142. As a result, the sealing member 160 can further prevent a failure of the sensor chip 114 due to water and dust.

While the sealing member 160 has an annular shape, the present modification is not limited thereto. The sealing member 160 simply needs to be an annular member having the thickness in the radial direction larger than the distance d7. The sealing member 160 may have a rectangular section, for example. While the sealing member 160 is disposed in the gap between the holder guide 142 and the second cylindrical part 54, the present modification is not limited thereto. The sealing member 160, for example, may be disposed between the substrate fixing part 135 and the first annular plate outer surface 57 so as to be in contact with both of the substrate fixing part 135 and the first annular plate outer surface 57 along the circumferential direction of the first annular plate outer surface 57.

### Second modification of the first embodiment

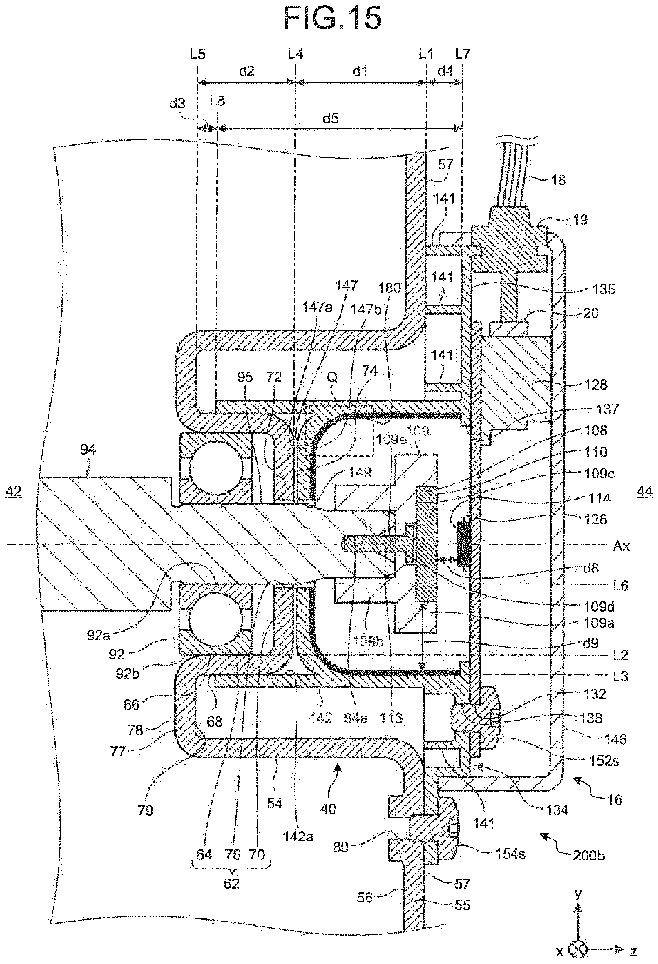

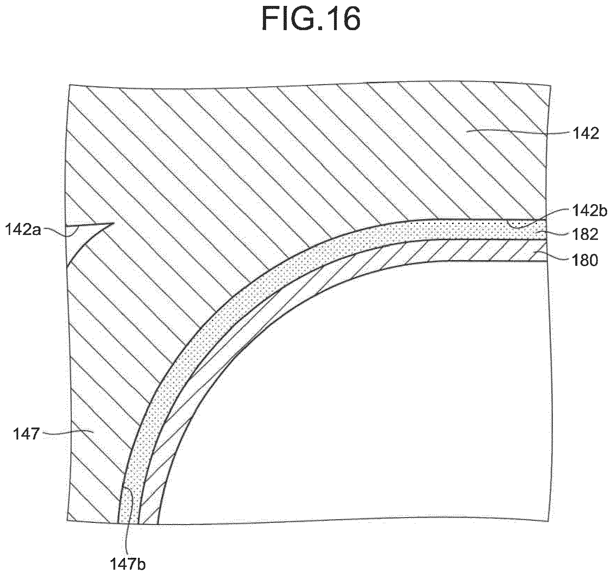

FIG. 15 is a sectional view schematically illustrating, in an enlarged manner, a section of the assembly structure of the sensor according to a second modification of the first embodiment. FIG. 16 is a sectional schematic view illustrating the position Q in FIG. 15 in an enlarged manner. The same components as those described in the embodiment above are denoted by like reference numerals, and overlapping explanation thereof is omitted.

As illustrated in FIG. 15, a flange 147 is a member protruding inward in the radial direction from the inner peripheral surface of the holder guide 142. The flange 147 is formed integrally with the holder guide 142. The flange 147 has a load-side surface 147a, an unload-side surface 147b, and a through hole 149, through which the shaft 94 penetrates. The load-side surface 147a is the surface of the flange 147 on the load side 42. A gap is formed between the bearing fixing part bottom wall outer surface 74 and the load-side surface 147a. The gap prevents the flange 147 from interfering with the bearing fixing part bottom wall 70. The unload-side surface 147b is the surface of the flange 147 on the unload side 44. In the following description, as illustrated in FIGS. 15 and 16, an inner peripheral surface of the holder guide 142 on the load side 42 with respect to the flange 147 is referred to as a load-side inner peripheral surface 142a. An inner peripheral surface of the holder guide 142 on the unload side 44 with respect to the flange 147 is referred to as an unload-side inner peripheral surface 142b.

As illustrated in FIGS. 15 and 16, a first magnetic shielding member 180 is provided so as to cover the unload-side surface 147b from the permanent magnet 108 side (unload side 44). The first magnetic shielding member 180 is provided so as to cover the whole periphery of the unload-side inner peripheral surface 142b. Consequently, as illustrated in FIG. 15, the first magnetic shielding member 180 covers at least part of the sensor chip 114 from the outside in the radial direction. While the first magnetic shielding member 180 is an iron sheet, for example, it is not limited thereto. The first magnetic shielding member 180 simply needs to be made of a soft magnetic material having sufficient magnetic permeability to block magnetism. Examples of the soft magnetic material include, but are not limited to, copper, an iron-based nickel alloy, etc.

A distance d8 illustrated in FIG. 15 is the distance from the sensor chip 114 to the surface 110 of the permanent magnet 108 in the rotation axis Ax direction. A distance d9 illustrated in FIG. 15 is the distance from the permanent magnet 108 to the first magnetic shielding member 180 in the radial direction with respect to the rotation axis Ax. The distance d9 is larger than the distance d8.

The first magnetic shielding member 180 may possibly fail to completely block magnetism. If part of magnetism that travels from the outside in the radial direction of the rotation axis Ax and reaches the first magnetic shielding member 180 passes through the first magnetic shielding member 180, the sensor chip 114 disposed farther away from the first magnetic shielding member 180 is less likely to be affected by the magnetism.

In an assembly structure 200b of a sensor according to the second modification of the first embodiment, the distance between the first magnetic shielding member 180 and the permanent magnet 108 in the radial direction of the shaft 94 is larger than the distance between the surface 110 of the permanent magnet 108 and the sensor chip 114 in the rotation axis Ax direction parallel to the rotation axis Ax. In other words, the sensor chip 114 can secure the distance from the first magnetic shielding member 180 because the distance d9 is larger than the distance d8. This structure can prevent malfunctions of the first sensor 116 and the second sensor 124 of the sensor chip 114 due to a disturbance magnetic field.

As illustrated in FIGS. 15 and 16, an elastic adhesive layer 182 is an adhesive that bonds the first magnetic shielding member 180 to the unload-side inner peripheral surface 142b and the unload-side surface 147b. Even when the holder 134 thermally expands by, for example, heat generated in the electric motor 31, the elastic adhesive layer 182 can expand and contract in accordance with the thermal expansion. The elastic adhesive layer 182 is, for example, a modified silicone- or urethane-based adhesive.

Typically, resin has a coefficient of thermal expansion several times that of metal. If a metal magnetic shielding member provided on the surface of a resin member is used to shield a sensor from magnetism, the magnetic shielding member may possibly fail by the difference in the thermal deformation amount between the magnetic shielding member and the resin member. As a result, the sensor may possibly malfunction because of the magnetism leaking from the broken part of the magnetic shielding member.

To address this, the assembly structure 200b of the sensor according to the second modification of the first embodiment includes the elastic adhesive layer 182 that bonds the first magnetic shielding member 180 to the holder guide 142 and the flange 147. In other words, the elastic adhesive layer 182 having a stretching property bonds the first magnetic shielding member 180 made of metal to the holder 134 made of resin. With this structure, if the first magnetic shielding member 180 and the holder 134 are deformed by temperature change, the elastic adhesive layer 182 can expand and contract in accordance with the deformation. Consequently, a stress generated in the first magnetic shielding member 180 and the holder 134 due to the temperature change can be reduced. As a result, this structure can prevent breakage in the first magnetic shielding member 180, thereby preventing malfunctions of the sensor chip 114.

Typically, the housing 40 of the electric motor 31 is made of a non-magnetic material, such as aluminum. Accordingly, most of the magnetism generated from the magnet 100, the coil 106, and other components of the electric motor 31 passes through the housing 40 and leaks outside the electric motor 31. Consequently, in the conventional assembly structure of a magnetic sensor, the magnetic sensor may possibly perform erroneous detection because of the magnetism generated from the magnet 100, the coil 106, and other components.

To address this, as illustrated in FIG. 15, the assembly structure 200b of the sensor according to the second modification of the first embodiment includes the flange 147 disposed between the unload-side bearing 92 and the permanent magnet 108. The shaft 94 penetrates through the flange 147, and the part of the flange 147 on the outer side in the radial direction of the shaft 94 is connected to the holder guide 142. The assembly structure 200b of the sensor further includes the first magnetic shielding member 180 provided so as to cover the whole periphery of the unload-side inner peripheral surface 142b of the holder guide 142 and cover the flange 147 from the permanent magnet 108 side. With this structure, at least part of the sensor chip 114 is covered with the first magnetic shielding member 180 from the outside in the radial direction. Furthermore, in the assembly structure 200b of the sensor, the unload-side surface 147b of the flange 147 is covered with the first magnetic shielding member 180. With this structure, the first magnetic shielding member 180 can cover the most part of the sensor chip 114 on the load side 42. Consequently, the assembly structure 200b of the sensor can block most of the magnetism generated from the magnet 100, the coil 106, and other components and reaching the sensor chip 114. As a result, the assembly structure 200b of the sensor can prevent erroneous detection performed by the first sensor 116 and the second sensor 124 because of the magnetism generated from the magnet 100, the coil 106, and other components.

While the first magnetic shielding member 180 covers at least part of the sensor chip 114 from the outside in the radial direction in the assembly structure 200b of the sensor according to the second modification of the first embodiment, the present modification is not limited thereto. In the assembly structure 200b of the sensor, for example, the first magnetic shielding member 180 may extend to the opening 137 (refer to FIG. 15) of the substrate fixing part 135 to cover the entire sensor chip 114 from the outside in the radial direction. This structure can further block the disturbance magnetic field that reaches the sensor chip 114 from the outside of the holder guide 142 in the radial direction. Consequently, this structure can further prevent malfunctions of the sensor chip 114.

### Third modification of the first embodiment

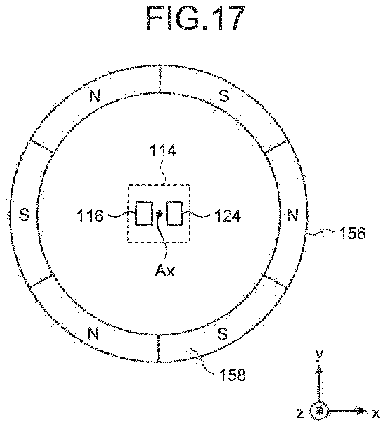

FIG. 17 is a diagram for explaining the permanent magnet according to a third modification of the first embodiment. The same components as those described in the embodiment above are denoted by like reference numerals, and overlapping explanation thereof is omitted. A permanent magnet 156 according to the third modification of the first embodiment has the same structure as that of the permanent magnet 108 according to the first embodiment except that the north pole and the south pole are alternately disposed along the circumference of the permanent magnet 156 and that the permanent magnet 156 has a surface 158 instead of the surface 110. An assembly structure of a sensor including the permanent magnet 156 and an electric motor provided with the assembly structure of the sensor has the same advantageous effects as those of the assembly structure 200 of the sensor according to the first embodiment and the electric motor 31 provided with the assembly structure 200 of the sensor.

### Second embodiment

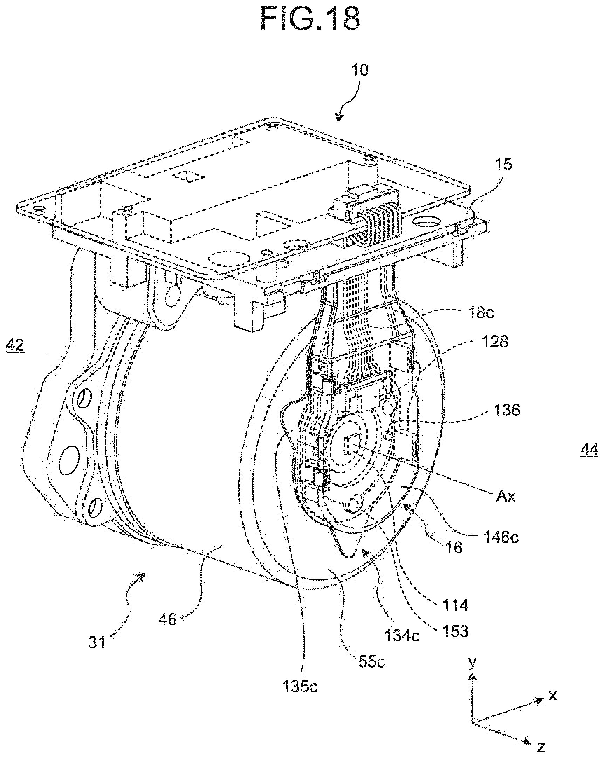

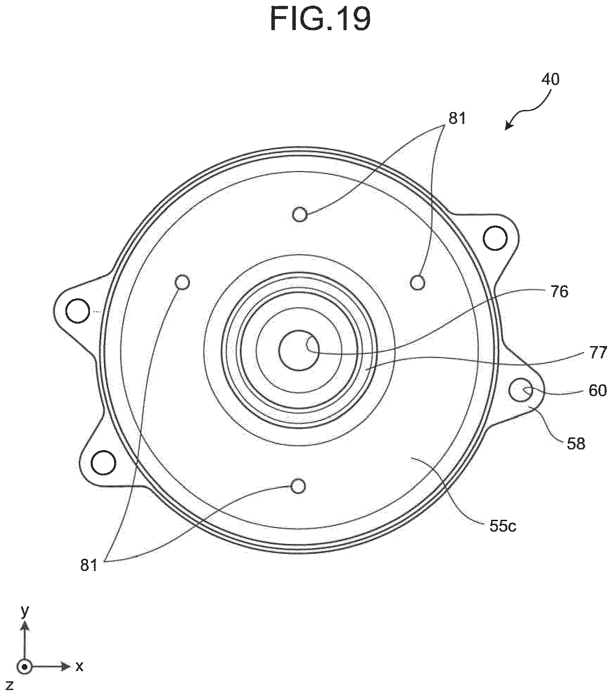

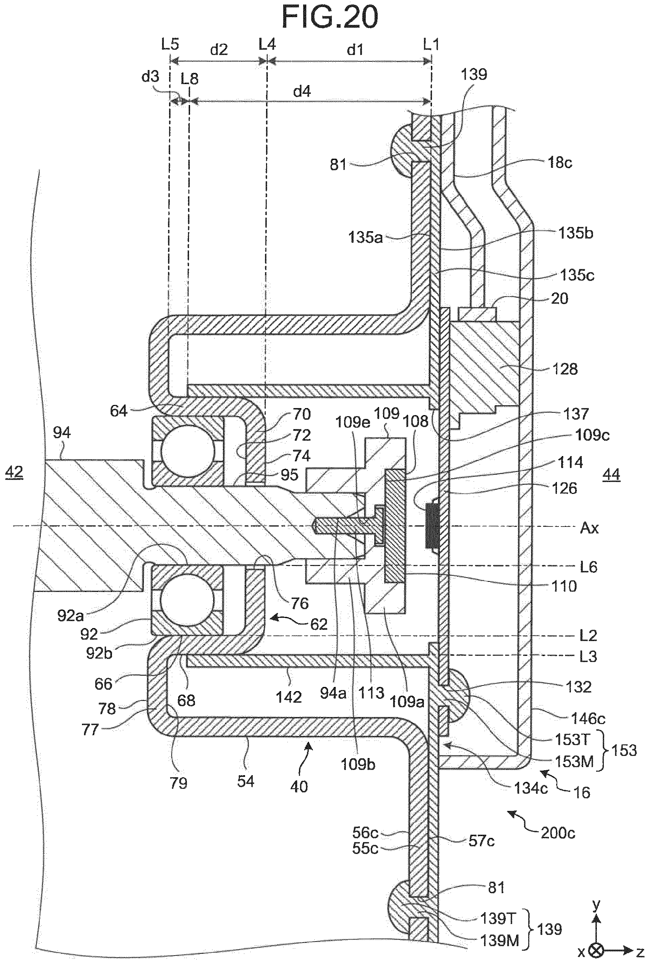

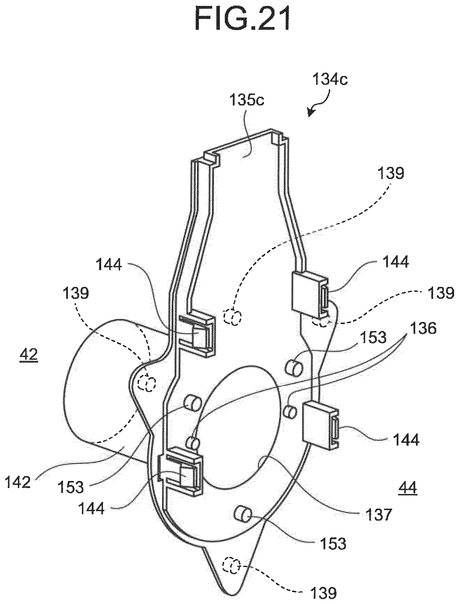

FIG. 18 is a perspective view of the electric motor according to a second embodiment. FIG. 19 is a front view of the housing, when viewed from the unload side according to the second embodiment. FIG. 20 is a sectional view schematically illustrating, in an enlarged manner, a section of the assembly structure of the sensor according to the second embodiment. FIG. 21 is a perspective view of the holder according to the second embodiment. The same components as those described in the embodiment above are denoted by like reference numerals, and overlapping explanation thereof is omitted.

As illustrated in FIG. 18, a harness 18c is a cable that transmits the rotation phase signal SY (refer to FIG. 1) detected by the rotation angle sensor part 16 to the ECU 10. The harness 18c is what is called a flat cable bundling a plurality of electric wires in a planar shape and has the minimum length required to connect the ECU 10 and the rotation angle sensor part 16. In the harness 18c, cables are disposed side by side in the x-axis direction. In the harness 18c, the cables extend in parallel to the y-axis direction. The harness 18c electrically connects the circuit substrate 11 of the ECU 10 and the rotation angle sensor part 16. The harness 18c is connected to the circuit substrate 11 of the ECU 10 together with the bus bar 112. Alternatively, the harness 18c may be connected to the circuit substrate 11 of the ECU 10 via a through hole (not illustrated) that is individually formed and penetrates through the heat sink 15.

As illustrated in FIG. 19, a first annular plate 55c is an annular plate. The outer periphery of the first annular plate 55c is coupled to the end of the first cylindrical part 46 on the unload side 44. The inner periphery of the first annular plate 55c is coupled to the end surface of the second cylindrical part 54 on the unload side 44. The distance between the outer periphery and the inner periphery of the first annular plate 55c in the radial direction is equal to or larger than 22 mm, for example. The distance between the outer periphery and the inner periphery of the first annular plate 55c in the radial direction simply needs to be large enough to allow a resin caulking tool HT, which will be described later, to be inserted thereinto.

As illustrated in FIG. 20, the first annular plate 55c has a first annular plate inner surface 56c, a first annular plate outer surface 57c, and through holes 81. As illustrated in FIG. 20, the first annular plate inner surface 56c is the surface of the first annular plate 55c on the load side 42. The first annular plate outer surface 57c is the surface of the first annular plate 55c on the unload side 44. As illustrated in FIG. 19, the through holes 81 are formed in the first annular plate 55c. Four through holes 81 are formed in the first annular plate 55c. The through holes 81 extend in a direction parallel to the rotation axis Ax.

A holder 134c illustrated in FIG. 21 is in a state prior to be fixed to the housing 40 and the sensor substrate 126 by resin caulking. As illustrated in FIG. 21, the holder 134c is a member that fixes the electric motor 31 and the sensor substrate 126 at predetermined positions. The holder 134c includes a substrate fixing part 135c and the holder guide 142. The substrate fixing part 135c has the positioning columns 136 and 136, second bosses 139, first bosses 153, and the fixing hooks 144.

As illustrated in FIGS. 20 and 21, the substrate fixing part 135c is a plate-shaped member. The substrate fixing part 135c has a substrate fixing part inner surface 135a, a substrate fixing part outer surface 135b, and the opening 137. As illustrated in FIG. 20, the substrate fixing part inner surface 135a is the surface of the substrate fixing part 135c on the load side 42. The substrate fixing part outer surface 135b is the surface of the substrate fixing part 135c on the unload side 44. The opening 137 is formed in the substrate fixing part 135c. The opening 137 has a circular shape.

As illustrated in FIGS. 20 and 21, the second bosses 139 are substantially circular columnar protrusions formed integrally with the substrate fixing part inner surface 135a. Four second bosses 139 are formed on the substrate fixing part inner surface 135a. The diameter of the second boss 139 is smaller than that of the through hole 81 formed in the first annular plate 55c (refer to FIG. 19). The second bosses 139 are each formed at a position where the center of the protrusion coincides with the center of the through hole 81 formed in the first annular plate 55c when the holder 134c is assembled to the housing 40. As illustrated in FIG. 20, when the holder 134c is assembled to the housing 40, the second bosses 139 are each caulked by the resin caulking tool HT, thereby being deformed into a second boss head 139T and a second boss column 139M. The second bosses 139 are disposed on the outer side in the radial direction than the sensor chip 114. This structure enables the second bosses 139 to be fixed to the first annular plate 55c on the outside in the radial direction. The holder 134c and the housing 40 are positioned simultaneously with caulking the second bosses 139. Furthermore, in caulking the second bosses 139 with the resin caulking tool HT from the inside of the housing 40, this structure can facilitate insertion of the resin caulking tool HT. As a result, workability in assembling the holder 134c to the housing 40 can be improved. In addition, this structure makes heat or the like generated by the resin caulking tool HT less likely to be transmitted to the sensor chip 114.

As illustrated in FIGS. 20 and 21, the first bosses 153 are substantially circular columnar protrusions formed integrally with the substrate fixing part outer surface 135b. Three first bosses 153 are formed on the substrate fixing part outer surface 135b. The diameter of the first boss 153 is smaller than that of the through hole 132. The first bosses 153 are formed on the outer peripheral side than the positioning columns 136 and 136. The first bosses 153 are each formed at a position where the center of the protrusion coincides with the center of the through hole 132 formed in the sensor substrate 126 when the sensor substrate 126 is assembled to the holder 134c. As illustrated in FIG. 20, when the sensor substrate 126 is assembled to the substrate fixing part 135c, the first bosses 153 are each caulked by the resin caulking tool HT, thereby being deformed into a first boss head 153T and a first boss column 153M.

When the holder guide 142 is assembled to the housing 40, the substrate fixing part inner surface 135a comes into contact with the first annular plate outer surface 57c. When the substrate fixing part inner surface 135a comes into contact with the first annular plate outer surface 57c, the position of the substrate fixing part inner surface 135a corresponds to the position L1 (refer to FIG. 20). When the position of the substrate fixing part inner surface 135a is determined, the position L8 of the end surface of the holder guide 142 on the load side 42 is determined.

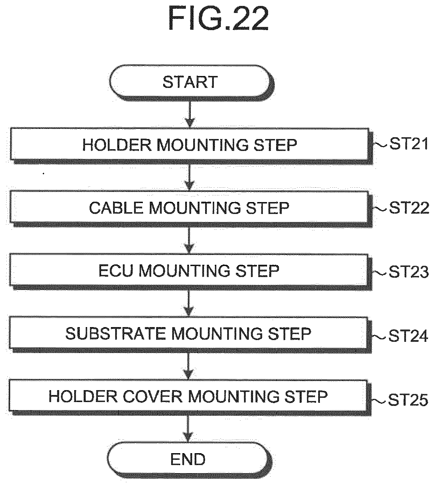

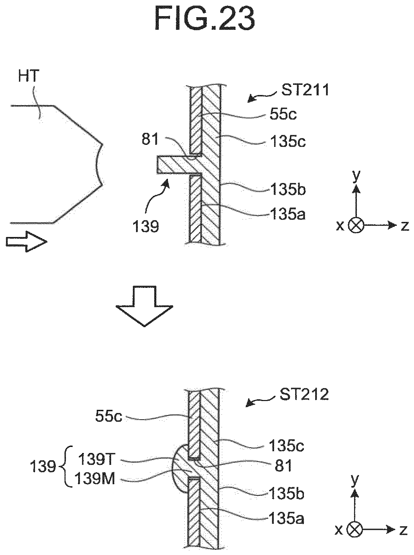

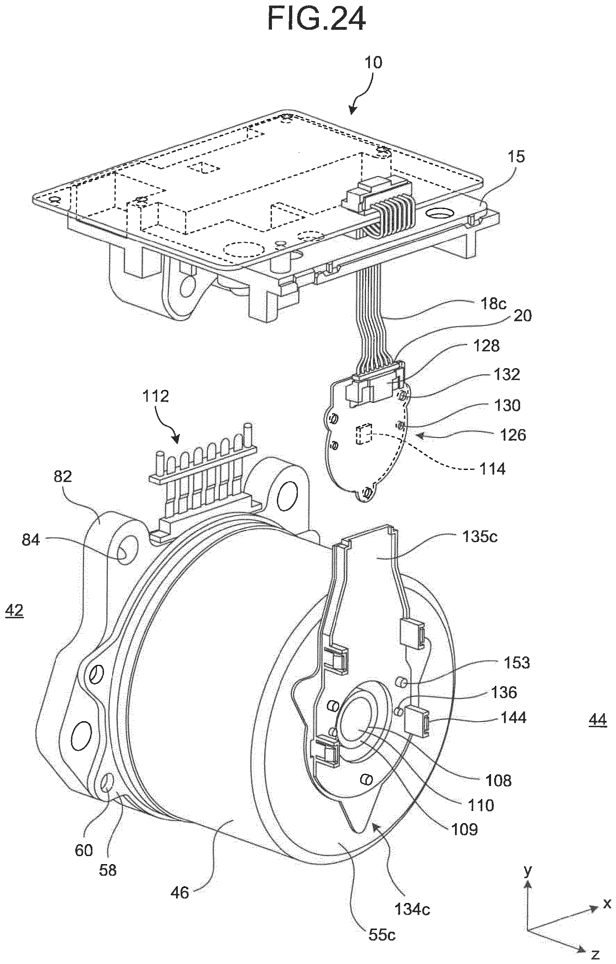

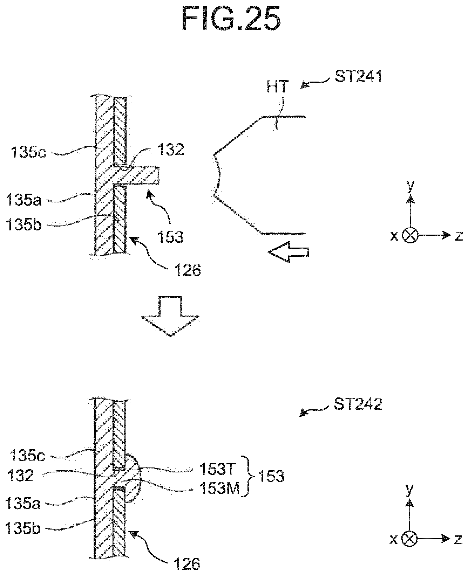

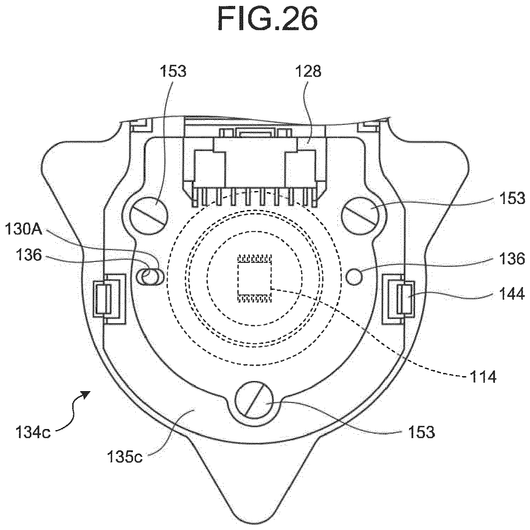

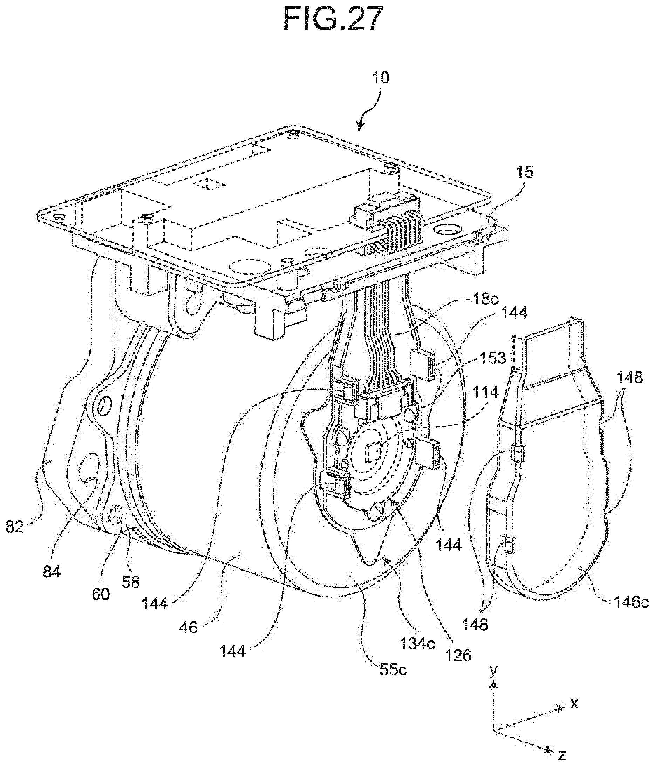

FIG. 22 is a flowchart of a procedure for assembling the assembly structure of the sensor and the electric motor including the assembly structure of the sensor according to the second embodiment. FIG. 23 is a diagram for explaining a procedure for assembling the holder to the housing at a holder mounting step. FIG. 24 is an exploded perspective view of the electric motor and the ECU according to the second embodiment. FIG. 25 is a diagram for explaining a procedure for assembling the sensor substrate to the holder at a substrate mounting step. FIG. 26 is a front view of the holder, to which the substrate is fixed, when viewed from the unload side. FIG. 27 is an exploded perspective view of the holder and the holder cover according to the second embodiment. The following describes a method for assembling the rotation angle sensor part 16 to the electric motor 31 using the holder 134c according to the second embodiment with reference to FIGS. 20 and 22 to 27.

As illustrated in FIG. 22, the method for assembling the electric motor 31 and the rotation angle sensor part 16 according to the second embodiment includes a holder mounting step ST21, a cable mounting step ST22, an ECU mounting step ST23, a substrate mounting step ST24, and a holder cover mounting step ST25.

At the holder mounting step ST21, a worker attaches the holder guide 142 to the bearing fixing part 62 formed in the housing 40 first. As illustrated in FIG. 20, the worker thrusts the holder guide 142 until the substrate fixing part inner surface 135a comes into contact with the first annular plate outer surface 57c. Consequently, the holder guide 142 comes into contact with the part of the bearing fixing part side wall outer surface 68 parallel to the rotation axis Ax. As a result, the position of the holder 134c in the radial direction is determined by the bearing fixing part side wall outer surface 68. As illustrated in FIG. 23, the worker inserts the second bosses 139 into the respective through holes 81 formed in the first annular plate 55c (Step ST211). The worker applies heat and pressure to the second bosses 139 with the resin caulking tool HT (Step ST212). As a result, the second bosses 139 are each plastically deformed into the second boss head 139T having a substantially hemispherical shape and the second boss column 139M having a columnar shape. The second boss column 139M and the second boss head 139T are integrally formed. The diameter of the second boss head 139T is larger than that of the through hole 81. The second boss head 139T and the substrate fixing part inner surface 135a sandwich the first annular plate 55c. As a result, the holder 134c is fixed to the first annular plate 55c by resin caulking, whereby the position of the holder 134c is fixed with respect to the first annular plate 55c. Consequently, the work for assembling the housing 40 and the holder 134c is simplified.

As illustrated in FIG. 24, at the cable mounting step ST22, the worker connects the harness-side connector 20 of the harness 18c extending from the ECU 10 to the substrate-side connector 128 mounted on the sensor substrate 126. The harness 18c is disposed along the substrate fixing part outer surface 135b.

At the ECU mounting step ST23, the worker fixes, to the housing 40, the heat sink 15 to which the ECU 10 is fixed. The bus bar 112 is electrically connected to the ECU 10.

As illustrated in FIG. 25, at the substrate mounting step ST24, the worker inserts the first bosses 153 into the respective through holes 132 formed in the sensor substrate 126 (Step ST241). At this time, the position of the sensor substrate 126 with respect to the substrate fixing part 135c is determined by the positioning columns 136 and 136 being inserted into the positioning holes 130 and 130A, respectively, formed in the sensor substrate 126. Subsequently, the worker applies heat and pressure to the first bosses 153 with the resin caulking tool HT (Step ST242). As a result, as illustrated in FIGS. 25 and 26, the first bosses 153 are each plastically deformed into the first boss head 153T having a substantially hemispherical shape and the first boss column 153M having a columnar shape. The first boss column 153M and the first boss head 153T are integrally formed. The diameter of the first boss head 153T is larger than that of the through hole 132. The first boss head 153T and the substrate fixing part outer surface 135b sandwich the sensor substrate 126. As a result, the sensor substrate 126 is fixed to the substrate fixing part 135c by resin caulking, whereby the position of the sensor substrate 126 is fixed with respect to the substrate fixing part 135c. Consequently, the work for assembling the sensor substrate 126 and the holder 134c is simplified.

As illustrated in FIG. 27, at the holder cover mounting step ST25, the worker inserts the fixing hooks 144, 144, 144, and 144 into the respective fixing openings 148, 148, 148, and 148, thereby fixing a holder cover 146c to the holder 134c.

The fixing hooks 144, 144, 144, and 144 are hooks formed on the end surface of the holder 134c on the unload side 44. The fixing hooks 144, 144, 144, and 144 protrude toward the unload side 44.

The holder cover 146c covers the sensor substrate 126 fixed to the holder 134c. The holder cover 146c protects the harness 18c on the unload side 44 extending from the ECU 10 to the sensor substrate 126. As illustrated in FIG. 27, the holder cover 146c has the fixing openings 148, 148, 148, and 148. The fixing hooks 144, 144, 144, and 144 formed on the holder 134c are inserted and fixed to the respective fixing openings 148, 148, 148, and 148.

While the second bosses 139 and the first bosses 153 are heated by the resin caulking tool HT in the method for assembling the electric motor 31 and the rotation angle sensor part 16 using the holder 134c according to the second embodiment, the present embodiment is not limited thereto. The second bosses 139 and the first bosses 153 may be deformed by ultrasonic welding of applying heat and pressure to deform resin, for example.

As illustrated in FIG. 20, an assembly structure 200c of a sensor according to the second embodiment includes the shaft 94, the permanent magnet 108, the first cylindrical part 46, the first annular plate 55c, the sensor chip 114, and the holder 134c.

Typically, to fix a holder or the like to a housing of an electric motor, the holder or the like is fixed by screwing screws into screw holes formed in the housing. As a result, screw chips may possibly enter into the housing.

To address this, in the assembly structure 200c of the sensor according to the second embodiment, the first annular plate 55c has the plurality of through holes 81 extending in the rotation axis Ax direction parallel to the rotation axis Ax. The holder 134c has the plurality of second bosses 139 fixed by resin caulking to the first annular plate 55c having the through holes 81. The second bosses 139 are disposed on the outer side in the radial direction than the sensor chip 114. With this structure, the holder 134c and the housing 40 can be fixed without using any screw, thereby preventing production of screw chips in the fixing. Furthermore, this structure can prevent intrusion of foreign matter into the housing 40, thereby preventing a failure of the electric motor 31 due to intrusion of foreign matter. As a result, this structure can improve the reliability of the electric motor 31. The fixing method according to the second embodiment requires a smaller number of parts than the fixing method using screws does, thereby reducing the work of managing parts.

In the assembly structure 200c of the sensor according to the second embodiment, the sensor substrate 126 has the plurality of through holes 132 extending in the rotation axis Ax direction parallel to the rotation axis Ax. The holder 134c has the plurality of first bosses 153 fixed by resin caulking to the sensor substrate 126 having the through holes 132. With this structure, the holder 134c and the sensor substrate 126 can be fixed without using any screw, thereby preventing production of screw chips in the fixing and preventing intrusion of foreign matter around the sensor substrate 126. As a result, this structure can prevent a failure of the rotation angle sensor part 16 due to intrusion of foreign matter and improve the reliability of the detected value of the rotation angle detected by the rotation angle sensor part 16.

### Third embodiment

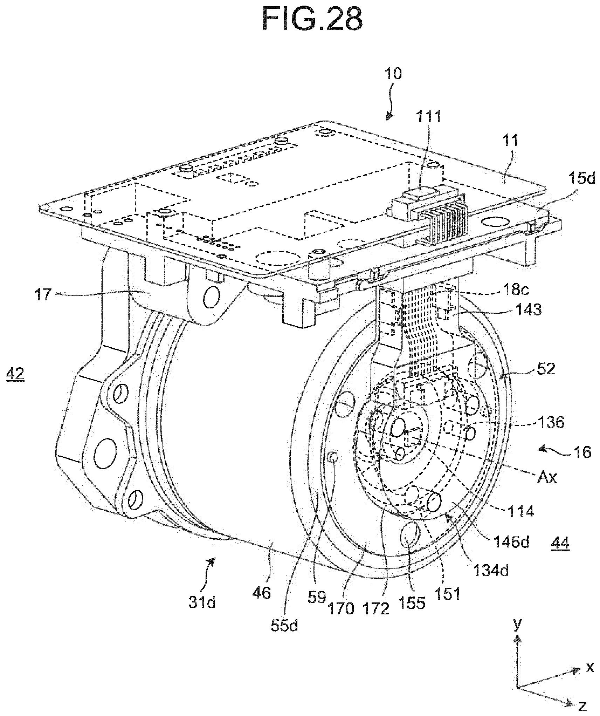

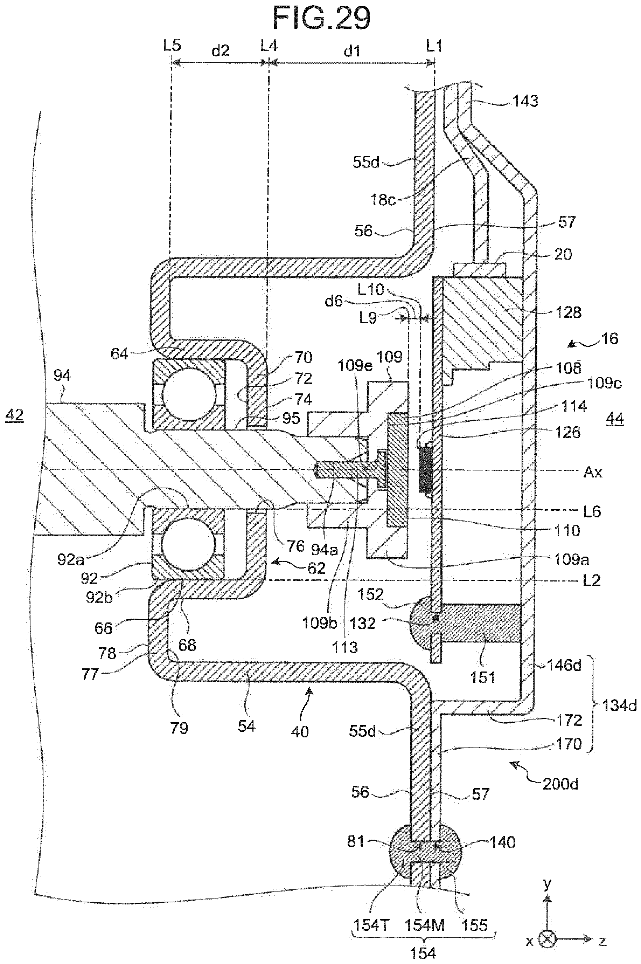

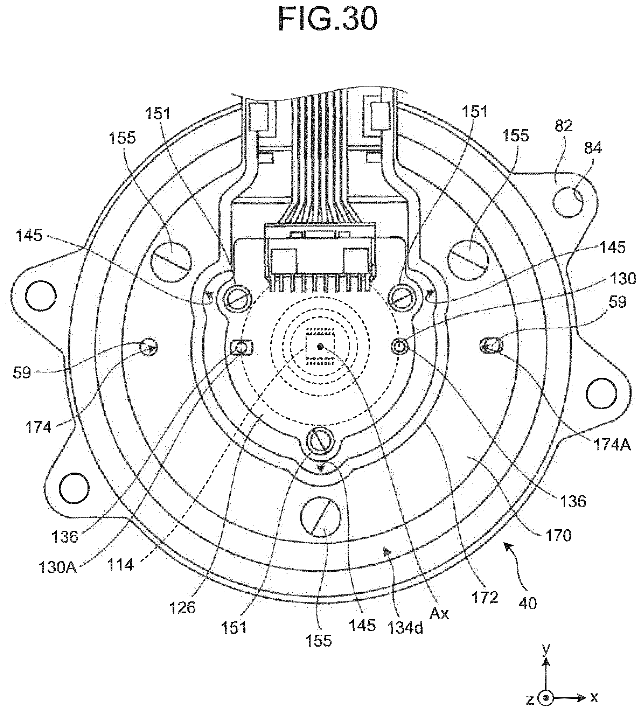

FIG. 28 is a perspective view of the electric motor according to a third embodiment. FIG. 29 is a sectional view schematically illustrating, in an enlarged manner, a section of the assembly structure of the sensor according to the third embodiment. FIG. 30 is a diagram for explaining the positional relation between the holder and the sensor chip inside the holder viewed in the rotation axis direction according to the third embodiment. The same components as those described in the embodiments above are denoted by like reference numerals, and overlapping explanation thereof is omitted.

As illustrated in FIG. 28, the rotation angle sensor part 16 includes at least a holder 134d and the sensor chip 114. To prevent intrusion of foreign matter, the sensor chip 114 is covered and protected with a holder cover 146d of the holder 134d. The sensor chip 114 is disposed at a predetermined position with respect to the rotation axis Ax. The holder 134d has a fixing part 170 for fixing the holder 134d to the bottom wall 52, the holder cover 146d, a cable extension cover 143, and a holder side wall 172. In the holder 134d, the fixing part 170, the holder cover 146d, the cable extension cover 143, and the holder side wall 172 are integrally formed out of resin.

The position of the holder 134d is guided by positioning protrusions 59 provided on the surface of the bottom wall 52. The holder 134d is fixed to the bottom wall 52 with rivet heads 155, which will be described later.

The ECU 10 includes a heat sink 15d that not only serves as a housing of the ECU 10 but also promotes heat radiation from the circuit substrate 11 of the ECU 10. The heat sink 15d has an installation part 17 serving as a curved surface extending along the first cylindrical part 46. The heat sink 15d is fixed to the housing 40 with screws, for example.

As illustrated in FIG. 29, the harness 18c is guided by the cable extension cover 143.

FIG. 30 is a plan view of the sensor substrate 126 closer to the load side 42 than the holder cover 146d to the load side 42, when viewed from the unload side 44 illustrated in FIGS. 28 and 29 in the z-axis direction through the space surrounded by the holder side wall 172. As illustrated in FIGS. 28 and 30, the holder cover 146d, the cable extension cover 143, and the holder side wall 172 form a recess opening toward the load side 42.

As illustrated in FIG. 28, the holder 134d has the holder cover 146d disposed at a position different from the position of the fixing part 170 in the z-axis direction. The holder cover 146d covers at least the sensor substrate 126.

As illustrated in FIG. 28, the holder 134d has the holder side wall 172 that connects the outer periphery of the holder cover 146d and the fixing part 170. As illustrated in FIG. 30, the holder side wall 172 is provided around the sensor substrate 126 viewed in the rotation axis Ax direction.

The holder cover 146d has the positioning columns 136 and support columns 151 standing toward the load side 42 in the z-axis direction. The holder cover 146d, the positioning columns 136, and the support columns 151 are integrally formed out of resin.

The holder side wall 172 has curved parts 145 protruding toward the outside in the radial direction near the respective support columns 151. The curved parts 145 secure the distance from the respective support columns 151.

Positioning holes 174 and 174A are openings formed in the fixing part 170. To fix the holder 134d to the housing 40, the positioning protrusions 59 and 59 formed on a first annular plate 55d (refer to FIG. 28) are inserted into the positioning holes 174 and 174A, respectively. The positioning hole 174A is an elongated hole that is long in one direction and short in another direction. This structure facilitates insertion of the positioning protrusions 59 and 59 into the positioning holes 174 and 174A, respectively.

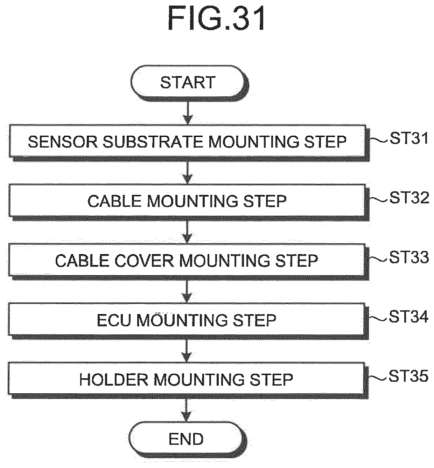

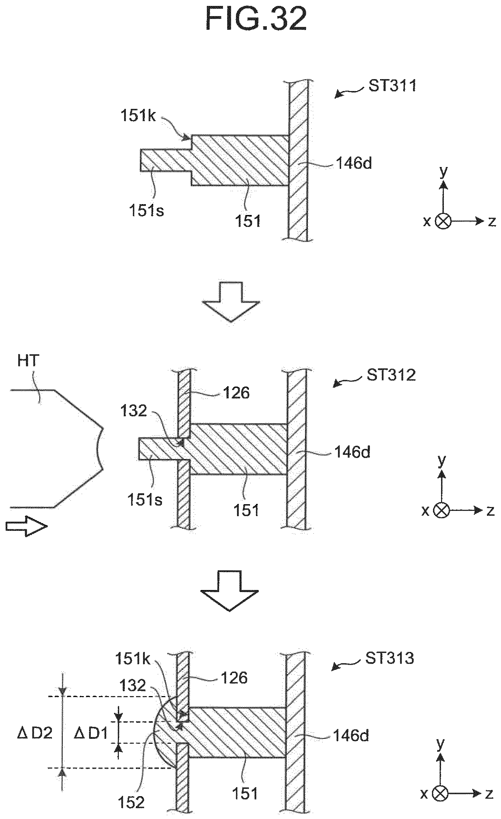

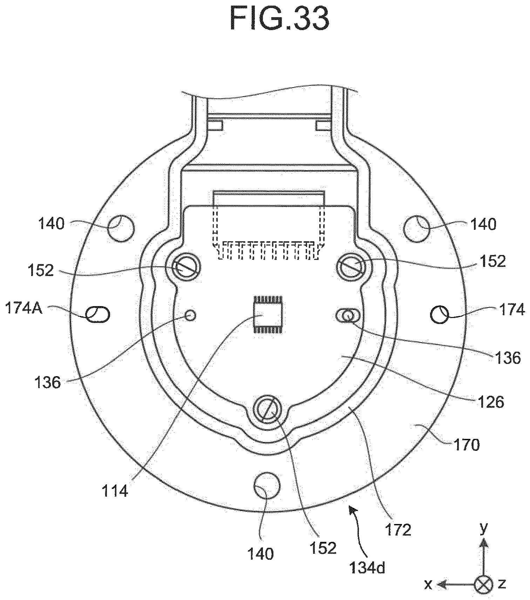

FIG. 31 is a flowchart of a procedure for assembling the assembly structure of the sensor and the electric motor including the assembly structure of the sensor according to the third embodiment. FIG. 32 is a diagram for explaining a sensor substrate mounting procedure according to the third embodiment. FIG. 33 is a plan view of the holder, to which the sensor substrate is fixed, when viewed from the load side according to the third embodiment. The holder 134d illustrated in FIG. 33 is a plan view of the sensor substrate 126, when viewed from the load side 42 illustrated in FIGS. 28 and 29 in the z-axis direction.

As illustrated in FIG. 31, the method for assembling an electric motor 31d and the rotation angle sensor part 16 according to the third embodiment includes a sensor substrate mounting step ST31, a cable mounting step ST32, a cable cover mounting step ST33, an ECU mounting step ST34, and a holder mounting step ST35.

At the sensor substrate mounting step ST31, first, the positioning columns 136 and 136 illustrated in FIGS. 28, 30, and 33 are inserted into the positioning holes 130 and 130A, respectively, of the sensor substrate 126 illustrated in FIG. 30 from the unload side 44 (refer to FIG. 28) of the sensor substrate 126. The support columns 151 illustrated in FIGS. 28, 30, and 33 are fixed to the respective through holes 132 of the sensor substrate 126 illustrated in FIG. 29 by resin caulking. The following describes the sensor substrate mounting step ST31 in greater detail with reference to FIG. 32.

As illustrated in FIG. 32, at a preparation step ST311, the support columns 151 each have a protrusion 151s on a base end 151k on the opposite side of the holder cover 146d in the z-axis direction, the protrusion 151s having a diameter smaller than that of the base end 151k. The outer diameter of the protrusion 151s is substantially equal to the inner diameter of the through hole 132.

At a resin caulking step ST312, the protrusion 151s is inserted into the through hole 132 of the sensor substrate 126. The sensor substrate 126 is positioned by the base end 151k in the z-axis direction. The protrusion 151s protruding from the sensor substrate 126 is heated and pressurized by the resin caulking tool HT. The resin caulking tool HT is less likely to come into contact with the holder side wall 172 because the holder side wall 172 has the curved parts 145.

At a sensor substrate fixing step ST313, the protrusion 151s is plastically deformed into a head 152. A diameter ΔD2 of the head 152 is larger than an inner diameter ΔD1 of the through hole 132. The head 152 and the base end 151k sandwich the sensor substrate 126, whereby the relative position between the sensor substrate 126 and the holder cover 146d is fixed. Accordingly, as illustrated in FIG. 33, the relative position between the sensor substrate 126 and the holder 134d is accurately determined. Consequently, the work for assembling the sensor substrate 126 and the holder 134d is simplified.

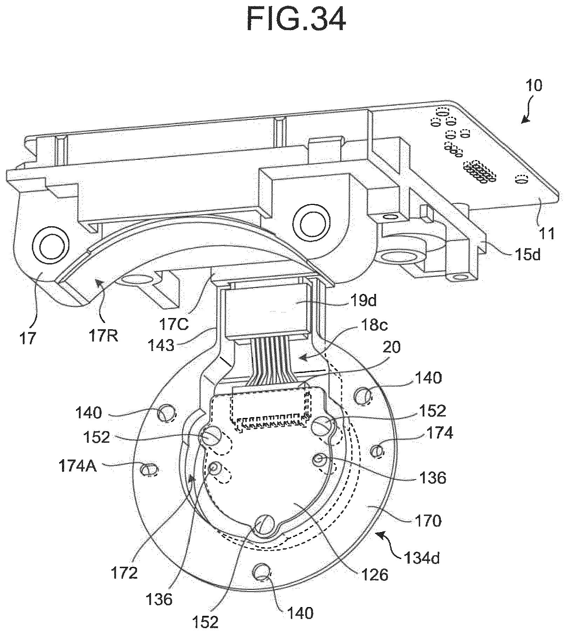

FIG. 34 is a perspective view of an ECU assembly obtained by assembling the ECU and the holder according to the third embodiment. In the ECU 10, the harness 18c is connected in advance to a circuit-substrate-side connector 111 illustrated in FIG. 28. The harness 18c is led to the outside of the ECU 10 from a cable outlet 17C formed in the housing of the ECU 10. As illustrated in FIG. 31, at the cable mounting step ST32, a worker connects the harness-side connector 20 to the substrate-side connector 128 illustrated in FIG. 29.

As illustrated in FIG. 34, the cable extension cover 143 is fit and fixed to the cable outlet 17C. As a result, the position of the cable extension cover 143 with respect to the cable outlet 17C is determined, thereby reducing a stress applied to the harness 18c.

The cable extension cover 143 is disposed at a position straddling the gap between the ECU 10 and the electric motor 31d. For this reason, the harness 18c on the load side 42 needs to be protected. Subsequently, as illustrated in FIG. 31, at the cable cover mounting step ST33, the worker fits and fixes a cable cover 19d illustrated in FIG. 34 to the holder side wall 172 of the cable extension cover 143. Coupling of fitting claws, for example, prevents detachment of the cable cover 19d from the holder side wall 172 of the cable extension cover 143. As described above, the harness 18c is sandwiched and protected between the cable cover 19d and the cable extension cover 143 formed integrally with the fixing part 170.

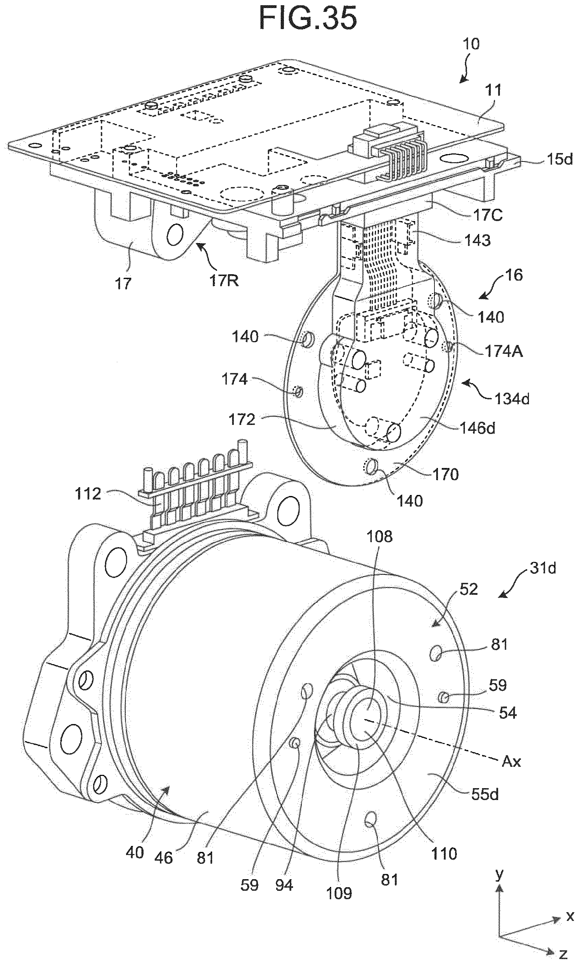

The installation part 17 illustrated in FIG. 34 has a curved surface 17R extending along the first cylindrical part 46 illustrated in FIG. 28. FIG. 35 is an exploded perspective view of the electric motor and the ECU according to the third embodiment. At the ECU mounting step ST34 illustrated in FIG. 31, the worker mounts the ECU 10 illustrated in FIG. 35 on the electric motor 31d. The bus bar 112 is connected to the circuit substrate 11 of the ECU 10. The rotation angle sensor part 16 is disposed on the bottom wall 52 side of the housing 40.

As illustrated in FIGS. 33 and 35, the through holes 140, 140, and 140 are openings formed in the fixing part 170. As illustrated in FIG. 33, three through holes 140, 140, and 140 are formed.

As illustrated in FIGS. 35 and 30, to fix the holder 134d to the housing 40, the positioning protrusions 59 and 59 are inserted into the positioning holes 174 and 174A, respectively. The positioning protrusions 59 and 59 guide the position of the holder 134d with respect to the housing 40.

As a result, the position of the through hole 81 of the first annular plate 55d illustrated in FIG. 35 coincides with the position of the through hole 140 of the fixing part 170, whereby the two through holes communicate with each other.

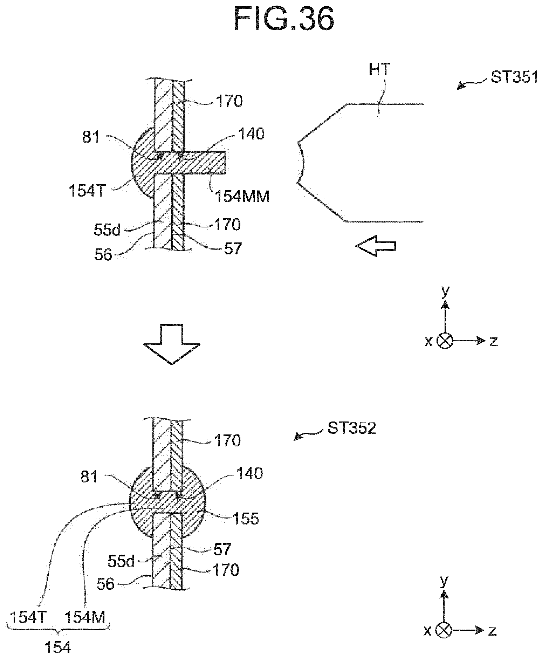

At the holder mounting step ST35, rivets 154 illustrated in FIG. 29 are each inserted into the through hole 81 of the first annular plate 55d and the through hole 140 of the fixing part 170 from the load side 42. The rivets 154 are fixed by resin caulking. The following describes the holder mounting step ST35 in greater detail with reference to FIG. 36.

FIG. 36 is a diagram for explaining the holder mounting procedure according to the third embodiment. As illustrated in FIG. 36, at a rivet preparation step ST351, the rivets 154 are resin rivets each having a rivet shaft 154MM and a rivet head 154T. The rivet shaft 154MM is inserted into the through hole 81 of the first annular plate 55d and the through hole 140 of the fixing part 170. The outer diameter of the rivet shaft 154MM is substantially equal to the inner diameter of the through holes 81 and 140.

The rivet shaft 154MM protruding from the fixing part 170 is heated and pressurized by the resin caulking tool HT.

At a holder fixing step ST352, the rivet shaft 154MM is plastically deformed into the rivet head 155. As illustrated in FIGS. 29 and 36, the rivet head 154T and the rivet head 155 are connected with each other by a rivet shaft 154M. The rivet head 154T and the rivet head 155 sandwich the first annular plate 55d and the fixing part 170, whereby the relative position between the first annular plate 55d and the fixing part 170 is fixed as illustrated in FIGS. 29 and 30. Accordingly, as illustrated in FIG. 28, the relative position between the housing 40 and the holder 134d is accurately determined. Because the rivet heads 155 are positioned on the unload side 44, this structure facilitates the worker's handling of the resin caulking tool HT, thereby improving the workability in fixing the first annular plate 55d and the holder 134d.

The fixing part 170 is pressed against the first annular plate 55d by the rivets 154, thereby being made parallel to the first annular plate outer surface 57 and orthogonal to the shaft 94. The holder cover 146d is parallel to the fixing part 170. The sensor substrate 126 is supported by the support columns 151 such that the sensor substrate 126 is parallel to the fixing part 170. The sensor chip 114 is mounted on the sensor substrate 126. As a result, the fixing part 170, the sensor substrate 126, and the sensor chip 114 are disposed at positions orthogonal to the rotation axis Ax. The sensor chip 114 is disposed at a predetermined position on a plane orthogonal to the rotation axis Ax of the shaft 94. This structure reduces errors in inclination of the sensor chip 114 with respect to the surface 110 of the permanent magnet 108. As a result, errors in the rotation angle of the shaft 94 detected by the sensor chip 114 are reduced.

As described above, an assembly structure 200d of the sensor illustrated in FIG. 29 includes the shaft 94, the housing 40, the permanent magnet 108, the sensor chip 114, and the holder 134d. The housing 40 includes; the first cylindrical part 46 (refer to FIG. 28); the second cylindrical part 54 positioned on the inner side in the radial direction than the first cylindrical part 46; and the first annular plate 55d that is an annular plate having the outer periphery connected to the first cylindrical part 46 and the inner periphery connected to the second cylindrical part 54 and that has the plurality of through holes 81 penetrating in a direction parallel to the rotation axis Ax of the shaft 94. The holder 134d holds the sensor chip 114 and has the plate-shaped fixing part 170 having the through holes 140 extending in a direction parallel to the rotation axis Ax of the shaft 94. The through holes 81 and the respective through holes 140 are coupled with each other with resin.

Typically, to fix a holder or the like to a housing of an electric motor, the holder or the like is fixed by screwing screws into screw holes formed in the housing. Accordingly, screw chips may possibly enter into the housing.

To address this, in the assembly structure 200d of the sensor according to the third embodiment, the housing 40 includes the second cylindrical part 54 positioned on the inner side in the radial direction than the first cylindrical part 46. The inner periphery of the first annular plate 55d is connected to the second cylindrical part 54. The holder 134d has the fixing part 170 having the plurality of through holes 140 penetrating in the rotation axis Ax direction parallel to the rotation axis Ax. The first annular plate 55d and the holder 134d are fixed by coupling, with resin (rivets 154), the through holes 81 penetrating in the rotation axis Ax direction in the first annular plate 55d and the respective through holes 140.

Similarly to the assembly structure 200c of the sensor according to the second embodiment, this structure can prevent intrusion of foreign matter into the housing 40, thereby preventing a failure of the electric motor 31 due to the intrusion of foreign matter. Furthermore, the assembly position of the sensor chip 114 can be accurately determined with respect to the first annular plate 55d using the first annular plate outer surface 57 of the first annular plate 55d as a reference. Consequently, the sensor chip 114 and the permanent magnet 108 are positioned. As a result, errors in the rotation angle of the shaft 94 detected by the first sensor 116 and the second sensor 124 of the sensor chip 114 are reduced.

In the assembly structure 200d of the sensor according to the third embodiment includes the rivets 154 each including: the rivet shaft 154M penetrating through the through hole 81 and the through hole 140; the rivet head 154T in contact with the first annular plate 55d; and the rivet head 155 in contact with the fixing part 170. The rivet head 154T and the rivet head 155 sandwich the first annular plate 55d and the fixing part 170. Consequently, the workability in fixing the first annular plate 55d and the holder 134d with the rivets 154 is improved.

In the assembly structure 200d of the sensor according to the third embodiment, the sensor chip 114 is mounted on the sensor substrate 126. The holder 134d includes the plurality of support columns 151 that support the sensor substrate 126 and extend in the rotation axis Ax direction. Consequently, the work for assembling the sensor chip 114 and the holder 134d is simplified.

The assembly structure 200d of the sensor according to the third embodiment has the holder cover 146d disposed at a position different from the position of the fixing part 170 in the rotation axis Ax direction and that covers at least the sensor substrate 126. The holder 134d has the holder side wall 172 that connects the outer periphery of the holder cover 146d and the fixing part 170. The support columns 151 stand on the holder cover 146d. With this structure, the relative position between the sensor substrate 126 and the holder 134d is accurately determined.

In the assembly structure 200d of the sensor according to the third embodiment, the support columns 151 are made of resin. The sensor substrate 126 has the plurality of through holes 132 at positions different from the position where the sensor chip 114 is mounted. The support columns 151 and the sensor substrate 126 are coupled with resin (the support columns 151 and the heads 152) penetrating through the respective through holes 132. Consequently, the work for assembling the sensor chip 114 and the holder 134d is simplified.

In the assembly structure 200d of the sensor according to the third embodiment, the first annular plate 55d has the positioning protrusions 59 protruding in the rotation axis Ax direction. The fixing part 170 has the positioning holes 174 and 174A, into which the respective positioning protrusions 59 are inserted, and that extend in the rotation axis Ax direction. Consequently, the assembly position of the sensor chip 114 can be accurately determined with respect to the first annular plate 55d.

The electric motor 31d according to the third embodiment includes the rotor 96 and the stator 102 that are accommodated in the first cylindrical part 46. The electric motor 31d includes a control device (ECU 10) that controls the electric motor 31d. A housing (installation part 17) of the ECU 10 (control device) is installed near the first cylindrical part 46. The holder 134d has the cable extension cover 143 that protects a cable (harness 18c) that connects the ECU 10 and the sensor chip 114. With this structure, the harness 18c provided between the ECU 10 and the electric motor 31d is protected.

In the electric motor 31d according to the third embodiment, the cable extension cover 143 is disposed at a position straddling the gap between the ECU 10 and the first cylindrical part 46. When the ECU 10 is installed on the electric motor 31d, the sensor chip 114 is disposed on the electric motor 31d side by the cable extension cover 143.

In the electric motor 31d according to the third embodiment, the harness 18c is a flat cable bundling a plurality of electric wires in a planar shape. The electric motor 31d includes the cable cover 19d that sandwiches the harness 18c with the cable extension cover 143. With this structure, the harness 18c provided between the ECU 10 and the electric motor 31d is protected.

### Fourth embodiment

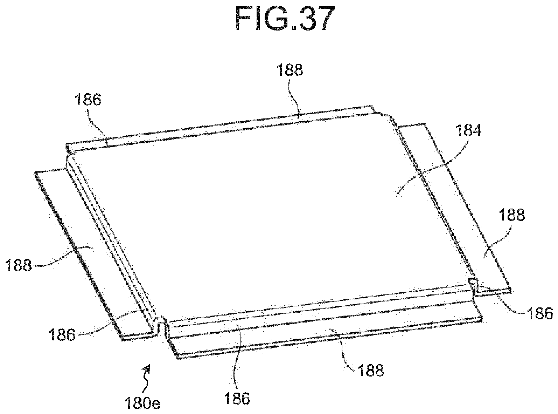

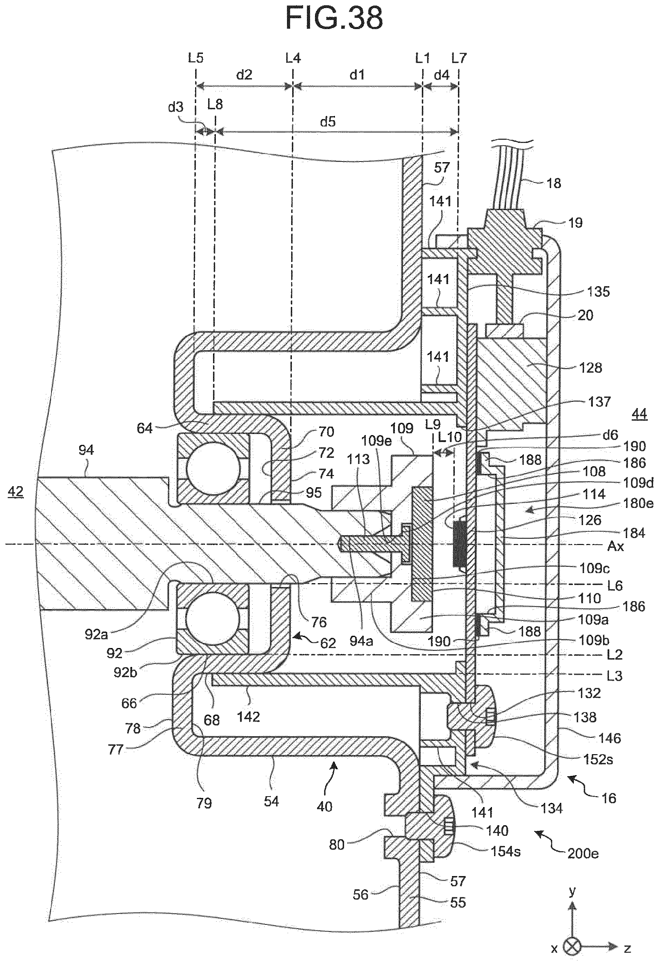

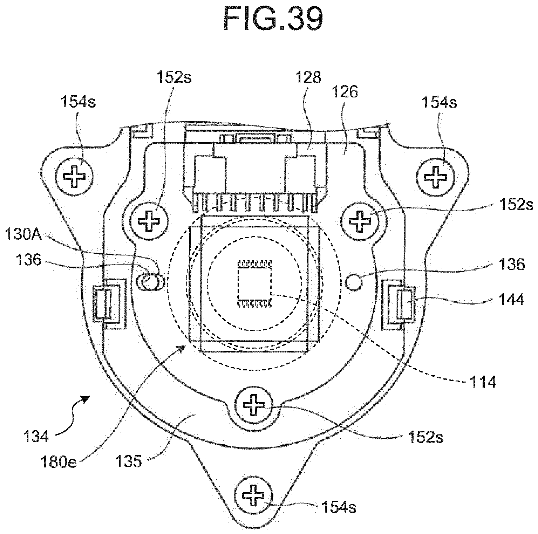

FIG. 37 is a perspective view of a second magnetic shielding member according to a fourth embodiment. FIG. 38 is a sectional view schematically illustrating, in an enlarged manner, a section of the assembly structure of the sensor according to the fourth embodiment. FIG. 39 is a front view of the holder, to which the sensor substrate is fixed, when viewed from the unload side according to the fourth embodiment. The same components as those described in the first embodiment are denoted by like reference numerals, and overlapping explanation thereof is omitted.

As illustrated in FIG. 37, a second magnetic shielding member 180e has a cover 184, four side walls 186, and four fixing parts 188. While the second magnetic shielding member 180e is an iron member, for example, it is not limited thereto. The second magnetic shielding member 180e simply needs to be made of a soft magnetic material having sufficient magnetic permeability to shield magnetism. Examples of the soft magnetic material include, but are not limited to, copper and an iron-based nickel alloy. The second magnetic shielding member 180e may be a metal foam having a myriad of hollows inside thereof or have a mesh shape. Alternatively, the second magnetic shielding member 180e may be formed by plating the surface of a metal member with a soft magnetic material, for example. Still alternatively, the second magnetic shielding member 180e may be formed by applying an ink made of a soft magnetic material, for example.

The cover 184 is a plate-shaped member. The cover 184 has a rectangular shape in planar view. The side walls 186 are plate-shaped members. The side walls 186 are connected to the respective ends of the cover 184 such that they are orthogonal to the cover 184. The fixing parts 188 are plate-shaped members. The fixing parts 188 are connected to the respective ends of the side walls 186 such that they are parallel to the cover 184.

As illustrated in FIG. 38, the second magnetic shielding member 180e is disposed on the surface of the sensor substrate 126 on the unload side 44. As illustrated in FIGS. 38 and 39, in the second magnetic shielding member 180e, the fixing parts 188 are fixed to the sensor substrate 126 with adhesive layers 190 interposed therebetween such that the cover 184 covers the sensor chip 114 from the unload side 44.

Typically, if an MR sensor (e.g., an AMR sensor, a GMR sensor, and a TMR sensor) is used to detect rotation of a motor, wiring, such as a harness, may possibly be disposed on the unload side of the MR sensor. As a result, the MR sensor may possibly erroneously detect the rotation of the motor because of a magnetic field generated from an electric current flowing through the wiring, such as a harness. Particularly in a case where the MR sensor is disposed in a limited space, such as the inside of a cabin, the MR sensor may possibly erroneously detect the rotation of the motor because of a magnetic field generated from an adjacent electronic device.

To address this, as illustrated in FIGS. 38 and 39, an assembly structure 200e of a sensor according to the fourth embodiment includes the second magnetic shielding member 180e disposed at a position sandwiching the sensor chip 114 with the permanent magnet 108 in the rotation axis Ax direction. The second magnetic shielding member 180e is fixed to the sensor substrate 126 so as to cover the sensor chip 114 in the rotation axis Ax direction. This structure can block most of a disturbance magnetic field reaching the sensor chip 114 from the unload side 44 of the sensor chip 114. In other words, this structure can prevent malfunctions of the sensor chip 114 due to the disturbance magnetic field. As a result, the assembly structure 200e of the sensor can prevent the sensor chip 114 from erroneously detecting the rotation of the electric motor 31.

### Fifth embodiment

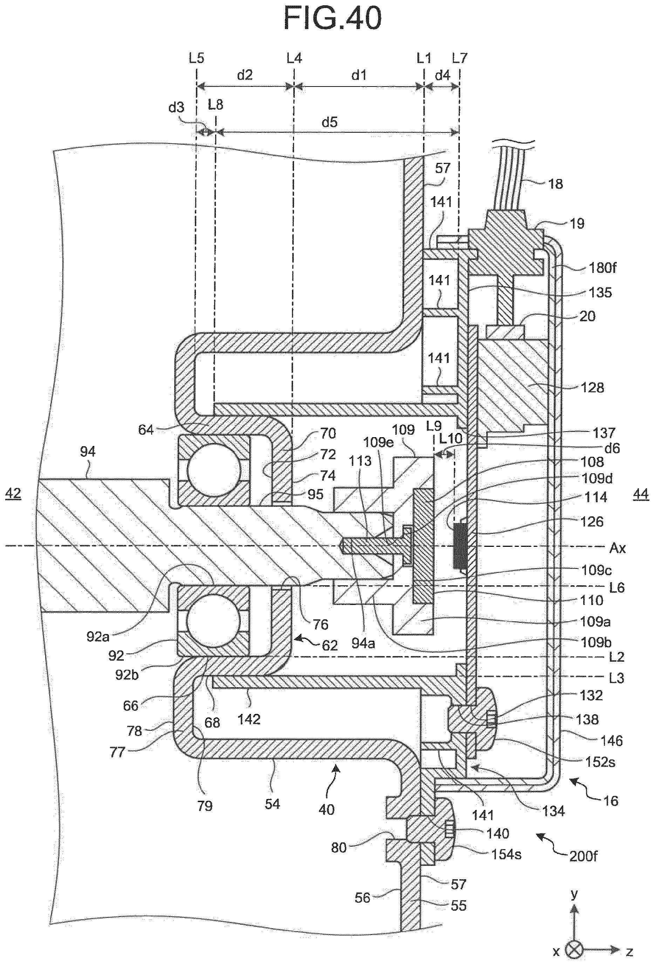

FIG. 40 is a sectional view schematically illustrating, in an enlarged manner, a section of the assembly structure of the sensor according to a fifth embodiment. The same components as those described in the first embodiment are denoted by like reference numerals, and overlapping explanation thereof is omitted.

As illustrated in FIG. 40, a second magnetic shielding member 180f is disposed covering the inner surface of the holder cover 146. The second magnetic shielding member 180f is formed by applying, to the inner surface of the holder cover 146, an ink made of a soft magnetic material having sufficient magnetic permeability to block magnetism. Examples of the soft magnetic material include, but are not limited to, iron, copper, and an iron-based nickel alloy. The second magnetic shielding member 180f may be formed by fixing a sheet-shaped soft magnetic material to the inner surface of the holder cover 146 with an adhesive interposed therebetween, for example.

In an assembly structure 200f of a sensor according to the fifth embodiment, the holder cover 146 is disposed at a position different from the position of the substrate fixing part 135 in the rotation axis Ax direction and covers at least the sensor substrate 126. The second magnetic shielding member 180f is disposed at a position so as to sandwich the sensor chip 114 with the permanent magnet 108 in the rotation axis Ax direction. The second magnetic shielding member 180f is fixed to the holder cover 146 so as to cover the sensor chip 114 in the rotation axis Ax direction. Consequently, the assembly structure 200f of the sensor has the same advantageous effects as those of the assembly structure 200e of the sensor according to the fourth embodiment.

### Sixth embodiment

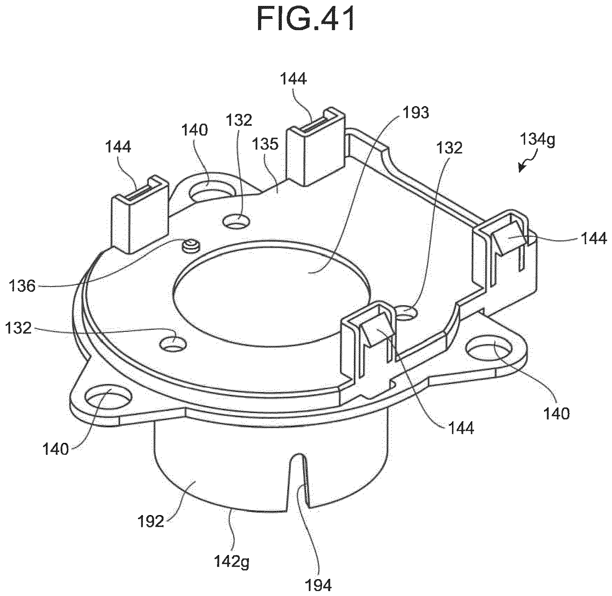

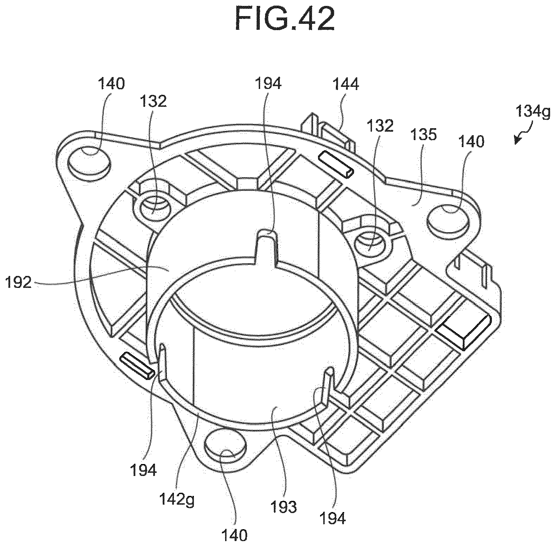

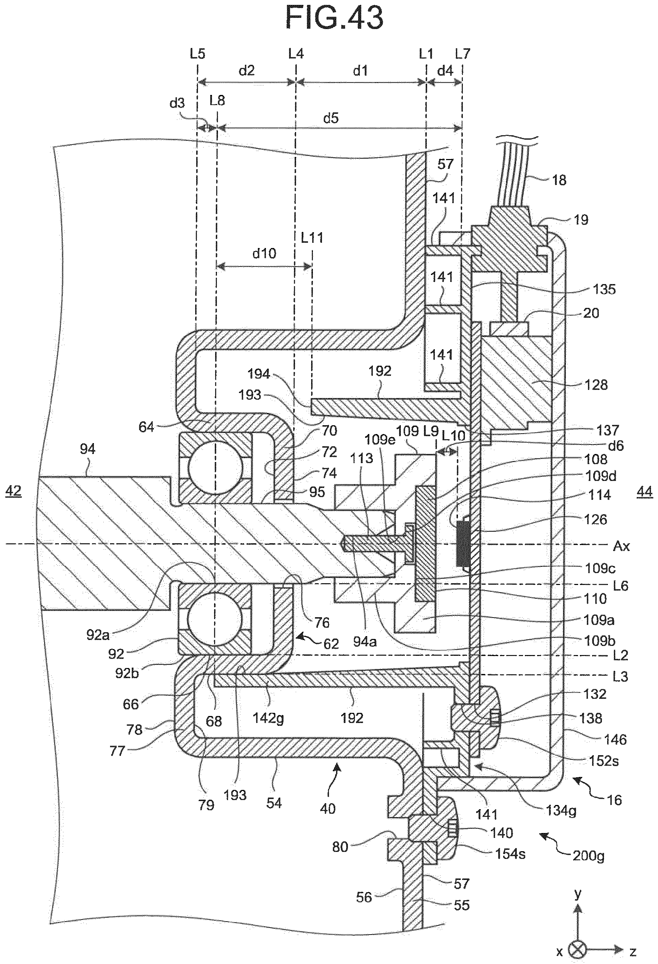

FIG. 41 is a perspective view of the holder viewed from the unload side according to a sixth embodiment. FIG. 42 is a perspective view of the holder viewed from the load side according to the sixth embodiment. FIG. 43 is a sectional view schematically illustrating, in an enlarged manner, a section of the assembly structure of the sensor according to the sixth embodiment. The same components as those described in the first embodiment are denoted by like reference numerals, and overlapping explanation thereof is omitted.

As illustrated in FIGS. 41 to 43, a holder 134g is identical with the holder 134 according to the first embodiment except that it has a holder guide 142g instead of the holder guide 142.

As illustrated in FIGS. 41 to 43, the holder guide 142g is a member having a substantially cylindrical shape. As illustrated in FIG. 43, the bearing fixing part 62 is inserted into the holder guide 142g such that an inner peripheral surface 193 comes into contact with the bearing fixing part 62. The central axis of the cylindrical shape of the holder guide 142g coincides with the center of the opening 137. The holder guide 142g is connected to the substrate fixing part 135 such that the central axis of the cylinder is orthogonal to both surfaces of the substrate fixing part 135.

An outer peripheral surface 192 of the holder guide 142g is parallel to the rotation axis Ax direction. The inner peripheral surface 193 of the holder guide 142g inclines such that the diameter increases as it is closer to the load side 42.

The holder guide 142g has cutouts 194 at different positions of 120 degrees apart in the circumferential direction of the cylinder. In other words, the cutouts 194 are formed at three respective positions in the holder guide 142g. The cutouts 194 are slits formed to extend in the rotation axis Ax direction. This structure enables the holder guide 142g to come into contact with the bearing fixing part 62 at at least three points. With this structure, the end of the holder guide 142g on the load side 42 becomes easy to be elastically deformed in the radial direction. As a result, the holder guide 142g can deform along the shape of the bearing fixing part 62 and come into contact with the bearing fixing part 62 at at least three points. Consequently, the holder guide 142g can position the holder 134g with respect to the bearing fixing part 62 more accurately. The positions and the number of cutouts 194 are not limited to those described above. The cutouts 194, for example, may be formed at different positions of 60 degrees apart in the circumferential direction of the holder guide 142g.

A position L11 illustrated in FIG. 43 indicates the position of the end of the cutout 194 closest to the unload side 44. A distance d10 illustrated in FIG. 43 indicates the distance from the position L8 to the position L11 in the rotation axis Ax direction. In other words, the distance d10 indicates the depth of the slit of the cutout 194. The distance d10 is larger than a value obtained by subtracting the distance d3 and the radius of curvature R2 from the distance d2. The structure allows the holder guide 142g to surely have the cutouts 194 in the circumferential direction in a part coming into contact with the bearing fixing part 62. With this structure, at least the part of the holder guide 142g coming into contact with the bearing fixing part 62 can be made easy to be elastically deformed in the radial direction. Even if the outer diameter of the bearing fixing part 62 is larger than the inner diameter of the holder guide 142g, the holder guide 142g can be elastically deformed outward in the radial direction, thereby bringing the holder 134g into contact with the bearing fixing part 62.

In an assembly structure 200g of a sensor according to the sixth embodiment, the diameter of the inner peripheral surface 193 of the holder guide 142g increases with distance from the substrate fixing part 135. This structure can facilitate insertion of the bearing fixing part 62 into the holder guide 142g. Even if the bearing fixing part side wall outer surface 68 is inclined with respect to the rotation axis Ax by press-fitting the unload-side bearing 92, the holder guide 142g can be assembled along the inclination of the bearing fixing part side wall outer surface 68.

Typically, if an MR sensor (e.g., an AMR sensor, a GMR sensor, and a TMR sensor) is used to detect rotation of a motor, the detection accuracy may possibly be significantly deteriorated because of its misalignment with the shaft of the motor.

To address this, in the assembly structure 200g of the sensor according to the sixth embodiment, the holder guide 142g has the cutouts 194 extending in parallel to the rotation axis Ax direction. With this structure, the holder guide 142g is easily elastically deformed outward in the radial direction when the bearing fixing part 62 is inserted into the holder guide 142g. Accordingly, the inner peripheral surface 193 of the holder guide 142g is more likely to come into surface contact with the bearing fixing part 62. Consequently, the holder guide 142g can determine the position of the holder 134g with respect to the bearing fixing part 62 with higher accuracy. With this structure, the holder 134g can determine the positions of the first sensor 116 and the second sensor 124 with respect to the rotation axis Ax with higher accuracy. As a result, the first sensor 116 and the second sensor 124 are disposed at the predetermined positions, thereby preventing deterioration in the detection accuracy of the first sensor 116 and the second sensor 124.

### Seventh embodiment

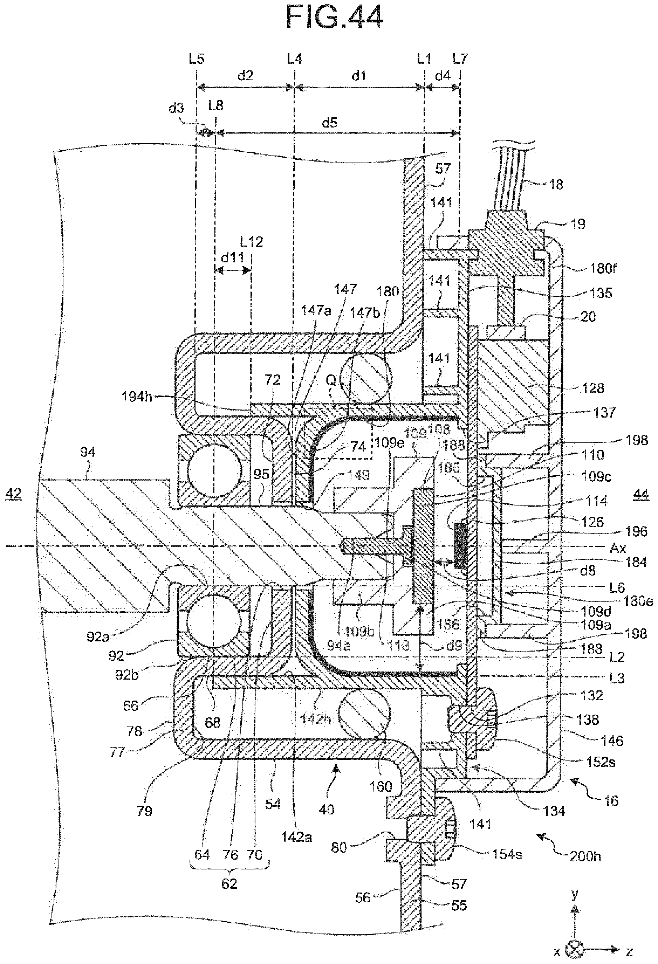

FIG. 44 is a sectional view schematically illustrating, in an enlarged manner, a section of the assembly structure of the sensor according to a seventh embodiment. The same components as those described in the embodiments above are denoted by like reference numerals, and overlapping explanation thereof is omitted.

A holder guide 142h is identical with the holder guide 142 according to the first embodiment except that it has cutouts 194h. As illustrated in FIG. 44, the cutout 194h is identical with the cutout 194 according to the sixth embodiment except the depth of the slit (distance d11). A position L12 illustrated in FIG. 44 indicates the position of the end of the cutout 194h closest to the unload side 44. The distance d11 illustrated in FIG. 44 indicates the distance from the position L8 to the position L12. The distance d11 is smaller than a value obtained by subtracting the distance d3 and the radius of curvature R2 from the distance d2. As described above, the cutout 194h may be formed such that the position L12 overlaps the bearing fixing part 62 in the rotation axis Ax direction.

Columnar parts 196 and 198 are circular columnar members. The ends of the columnar parts 196 and 198 on the unload side 44 are connected to the holder cover 146. The columnar parts 196 and 198 are formed integrally with the holder cover 146 by resin molding, for example. The end of the columnar part 196 on the load side 42 is in contact with the cover 184 of the second magnetic shielding member 180e. Four columnar parts 198 are formed on the holder cover 146. The ends of the four columnar parts 198 on the load side 42 are in contact with the respective four fixing parts 188 (refer to FIG. 37). In other words, the four columnar parts 198 press the second magnetic shielding member 180e against the sensor substrate 126. With this structure, an assembly structure 200h of a sensor can fix the second magnetic shielding member 180e to the sensor substrate 126 without using any adhesive. As a result, the assembly structure 200h of the sensor can prevent the sensor substrate 126 from being warped by shrinkage of an adhesive, in comparison with a case where the second magnetic shielding member 180e is fixed using an adhesive.

While the columnar parts 196 and 198 have a circular columnar shape, the present embodiment is not limited thereto. The columnar parts 196 and 198 may be polygonal columns having a polygonal section, for example.

While the present invention has been described with reference to the embodiments above, the technical scope of the present invention is not limited to the scope described in the embodiments. Various changes or improvements may be made in the embodiments without departing from the spirit of the invention. Embodiments resulting from the changes or improvements also fall within the technical scope of the present invention. Furthermore, a plurality of embodiments among the embodiments may be combined.

As illustrated in FIG. 44, for example, the sealing member 160, the first magnetic shielding member 180, and the second magnetic shielding member 180f may be combined. The sensor chip 114, for example, may include a third sensor in addition to the first sensor 116 and the second sensor 124. Alternatively, the number of sensors included in the sensor chip 114 may be one.

### Reference Signs List

1 electric power steering device
10 ECU
16 rotation angle sensor part
19, 19d cable cover
31 electric motor
40 housing
46 first cylindrical part 52 bottom wall
54 second cylindrical part
55 first annular plate
62 bearing fixing part
77 second annular plate
81 through hole (second through hole)
90a, 92a inner peripheral surface
90b, 92b outer peripheral surface
92 unload-side bearing (bearing)
94 shaft
108, 156 permanent magnet (magnet)
110, 158 surface
114 sensor chip (sensor)
116 first sensor
124 second sensor
126 sensor substrate
130, 130A positioning hole (hole)
132 through hole (first through hole)
134, 134c, 134d, 134g holder
135, 135c substrate fixing part
136 positioning column (protrusion)
139 second boss
140 through hole (third through hole)
142, 142g, 142h holder guide
146, 146c, 146d holder cover
147 flange
151 support column
153 first boss
154 rivet
154M rivet shaft
154T rivet head (first rivet head)
155 rivet head (second rivet head)
160 sealing member
170 fixing part
174, 174A positioning hole (fourth through hole)
180 first magnetic shielding member
180e, 180f second magnetic shielding member
182 elastic adhesive layer
193 inner peripheral surface
194, 194h cutout
200, 200a, 200b, 200c, 200d, 200e, 200f, 200g, 200h assembly structure of a sensor
Ax rotation axis
T steering torque
d1, d2, d3, d4, d5, d6, d7, d8, d9 distance
t thickness

## Claims

1. An assembly structure of a sensor comprising:
a shaft;
a housing including: a first cylindrical part; and a first annular plate that is an annular plate, an outer periphery of which is connected to an end of the first cylindrical part, and that is orthogonal to a rotation axis of the shaft;
a magnet accommodated inside the first cylindrical part in a radial direction and fixed to an end of the shaft;
a sensor configured to detect rotation of the magnet; and
a holder that is fixed to the first annular plate and that holds the sensor such that the sensor is disposed at a predetermined position with respect to the magnet.

2. The assembly structure of the sensor according to claim 1, further comprising:
a bearing including an outer ring and an inner ring that is fixed to the shaft, wherein
the housing further includes a bearing fixing part that has a cylindrical shape, and an inner peripheral surface of which fixes the outer ring, and
an outer peripheral surface of the bearing fixing part determines an assembly position of the holder with respect to the bearing fixing part such that the sensor is disposed at the predetermined position with respect to the magnet.

3. The assembly structure of the sensor according to claim 2, further comprising:
a sensor substrate on which the sensor is mounted, wherein
the holder has a substrate fixing part and a holder guide,
the substrate fixing part is a plate-shaped member, to which the sensor substrate is fixed, and
the holder guide has a cylindrical shape and fixes the substrate fixing part such that an inner peripheral surface of the cylinder is in contact with the outer peripheral surface of the bearing fixing part and that the substrate fixing part is orthogonal to the rotation axis.

4. The assembly structure of the sensor according to claim 3, wherein
the sensor substrate is a member having a plurality of holes,
the substrate fixing part has a plurality of protrusions on a surface thereof, to which the sensor substrate is fixed, and
the protrusions are inserted into the respective holes of the sensor substrate, thereby guiding a fixed position of the sensor substrate with respect to the substrate fixing part.

5. The assembly structure of the sensor according to claim 3 or 4, wherein the holder has a plurality of first bosses fixed by resin caulking to the sensor substrate that has a plurality of first through holes penetrating in a rotation axis direction parallel to the rotation axis.

6. The assembly structure of the sensor according to any one of claims 3 to 5, further comprising:
a second cylindrical part that has a cylindrical shape, that is disposed between the first cylindrical part and the bearing fixing part, and that has an end of the cylinder connected to an inner periphery of the first annular plate; and
a sealing member in contact with an outer peripheral surface of the holder guide and an inner peripheral surface of the second cylindrical part along a circumferential direction.

7. The assembly structure of the sensor according to any one of claims 3 to 6, further comprising:
a flange that is disposed between the bearing and the magnet, through which the shaft penetrates, and that has a part positioned on an outer side in the radial direction of the shaft connected to the holder guide; and
a first magnetic shielding member provided so as to cover the whole periphery of the inner peripheral surface of the holder guide and cover the flange from the magnet side.

8. The assembly structure of the sensor according to claim 7, further comprising an elastic adhesive layer that bonds the first magnetic shielding member to the holder guide and the flange.

9. The assembly structure of the sensor according to any one of claims 3 to 8, further comprising a second magnetic shielding member that is disposed at a position so as to sandwich the sensor with the magnet in the rotation axis direction, and that is fixed to the sensor substrate so as to cover the sensor in the rotation axis direction.

10. The assembly structure of the sensor according to any one of claims 3 to 8, further comprising:
a holder cover that is disposed at a position different from the position of the substrate fixing part in the rotation axis direction, and that covers at least the sensor substrate; and
a second magnetic shielding member that is disposed at a position so as to sandwich the sensor with the magnet in the rotation axis direction, and that is fixed to the holder cover so as to cover the sensor in the rotation axis direction.

11. The assembly structure of the sensor according to any one of claims 3 to 10, wherein the diameter of the inner peripheral surface of the holder guide increases with distance from the substrate fixing part.

12. The assembly structure of the sensor according to any one of claims 3 to 11, wherein the holder guide has a cutout extending in parallel to the rotation axis direction.

13. The assembly structure of the sensor according to any one of claims 1 to 12, wherein
the holder has a plurality of second bosses fixed by resin caulking to the first annular plate that has a plurality of second through holes penetrating in the rotation axis direction parallel to the rotation axis, and
the second bosses are disposed on an outer side in the radial direction than the sensor.

14. The assembly structure of the sensor according to claim 1, wherein
the housing further includes a second cylindrical part positioned on an inner side in the radial direction than the first cylindrical part,
an inner periphery of the first annular plate is connected to the second cylindrical part,
the holder has a fixing part having a plurality of third through holes penetrating in a rotation axis direction parallel to the rotation axis, and
the first annular plate and the holder are fixed by coupling, with resin, a plurality of second through holes penetrating in the rotation axis direction in the first annular plate and the third through holes.

15. The assembly structure of the sensor according to claim 14, further comprising:
a rivet containing the resin and including: a rivet shaft penetrating through the second through hole and the third through hole; a first rivet head in contact with the first annular plate; and a second rivet head in contact with the fixing part, wherein
the first rivet head sandwiches the first annular plate and the fixing part with the second rivet head.

16. The assembly structure of the sensor according to claim 14 or 15, wherein
the sensor is mounted on a sensor substrate,
the holder further comprises:
a plurality of support columns that support the sensor substrate and extend in the rotation axis direction;
a holder cover disposed at a position different from the position of the fixing part in the rotation axis direction and that covers at least the sensor substrate; and
a holder side wall that connects an outer periphery of the holder cover and the fixing part, and
the support columns stand on the holder cover.

17. The assembly structure of the sensor according to any one of claims 14 to 16, wherein
the first annular plate has a positioning protrusion protruding in the rotation axis direction, and
the fixing part has a fourth through hole, into which the positioning protrusion is inserted, and that extends in the rotation axis direction.

18. An electric motor comprising the assembly structure of the sensor according to any one of claims 1 to 17, wherein
the shaft is a shaft of the electric motor,
the electric motor comprises: a rotor and a stator that are accommodated in the first cylindrical part; and a control device configured to control the electric motor,
a housing of the control device is installed near the first cylindrical part, and
the holder has a cable extension cover that protects a cable that connects the control device and the sensor.

19. The electric motor according to claim 18, wherein
the cable extension cover is disposed at a position straddling a gap between the control device and the first cylindrical part,
the cable is a flat cable bundling a plurality of electric wires in a planar shape, and
the electric motor further comprises a cable cover that sandwiches the cable with the cable extension cover.

20. An electric power steering device comprising the electric motor according to claim 18 or 19, wherein
the electric motor generates assist steering torque.
